# EUROPEAN PATENT APPLICATION

(11) **EP 1 315 078 A1**
(43) Date of publication of application: **28.05.2003**
(21) Application number: 01945354.7
(22) Date of filing: 29.06.2001
(51) Int. Cl.: G06F 7/08

(54) **THREE-DIMENSIONAL, NON-LINEAR NUMERICAL ORDERING SYSTEM**

(30) Priority: 30.06.2000 ES 200001626
(71) Applicant: Espacio T, S.L., 50006 Zaragoza (ES)
(72) Inventor: BARRIOS LLANOS, Victor, Manuel, E-50006 Zaragoza (ES)
(74) Representative: Schäfer, Matthias, Dipl.-Ing.
(86) International application number: ES0100259
(87) International publication number: WO02003191

(57) **Abstract**

The invention relates to a three-dimensional non-linear numerical ordering system, consisting of a discrete structure, preferably three-dimensional in the form of a cube, wherein it is possible to operate with the 512⁸ sub-units or information points in continuous or virtual mode or preferably in real time mode by means of symmetry operations following the same constant cycle in each of the three x, y, z, coordinates that define it and with the aid of a fourth coordinate w, thereby resulting in a computationally irreducible system based on a isotropic unit pattern structure with fractal characteristics and properties.

The invention can be used in computer, electromagnetic and/or electronic components such as software and hardware, for instance, in computer and / or microprocessor programs, for information processing, preferably in electromagnetic media, and for the handling of photonic crystals.

## Description

The present descriptive memory refers, as its title indicates, to a three-dimensional non-linear numerical ordering system, developed to be integrated in computer, electromagnetic and/or electronic components such as software and hardware, for instance, in computer and / or microprocessor programs, for information processing, preferably in electromagnetic media.

To better understand the invention being put forward, and at the risk of oversimplifying, we will say that quantum mechanics and the theory of relativity are the result of the need to explain phenomena that occur at a very small scale and/or at very high speeds. Without going into detail, and again at the risk of oversimplifying, we can say that matter is made out of atoms, and atoms are in turn made out of protons, neutrons and electrons; making this division allows us to talk about the processes that occur at the atomic and nuclear levels. For example, when we modify the number of protons we have a transmutation of the atom. If we modify the number of neutrons, we obtain the different atom isotopes. And if we modify the number of electrons, we are performing an ionization.

In fact, the electrons are particles of matter that move in an electric field, and their motion constitutes the electric current itself. The moving electrons also generate magnetic fields that move with the particle.

The electrons are dispersed at distances in the order of 100,000 times the diameter of the nucleus, so that most of the space occupied by an atom is not material. Approximately 98% of what we see in the universe is made of materials whose form and composition are unknown (dark matter).

Boltzmann defined the distribution of thermal energy differentiating between the different gas particles' degrees of freedom, understanding as such the amount of possible independent motions of the system. For a free atom this number equals three, which corresponds to the possible independent motions of the particle along the three coordinate axes x, y, z.

Boltzmann proved that the average kinetic energy of gas particles is proportional to the absolute temperature. The gas macroscopic parameter, temperature, is the measure of the energy of the kinetic motion of certain microparticles (molecules, atoms). Temperature gives us a clear idea of the energy of the motions of the minute invisible particles.

The average kinetic energy is linked to the average speed of the molecules, which move along rectilinear trajectories when uninterrupted by the numerous collisions (thousands of millions per second).

Tests at laboratories have proved that when we analyze systems far from their equilibrium, new long-range interactions are established.

The current digital information processing systems are mainly based on the use of binary codes or sequential references, represented in octal, hexadecimal or other notations. With these systems, the higher the number of addresses the information is to be referenced in, the higher the number of digits needed to achieve it.

From the technical point of view, the problem is that when the volume of information to be processed is very high (because of its content or characteristics), the number of digits required to define the location and characteristics of the information also rises, reducing the efficiency of the information management processes, so much so that there comes a point where it is difficult to operate on it with the minimum desired efficiency.

These computer and/or electronic systems provide very detailed information, although independent, about all the parameters that define virtual objects or electronic information, making it very difficult to operate on different volumes of information in an interlinking mode and/or in real time.

When the transmission time of digital information is virtually instant, or when the volume of simultaneous information is very high, the linear processing of the information limits the potential of the system. This difficulty gets worse when operating with multimedia information (video, audio, text, etc.) in real time. The flexibility and tolerance of the system is limited by the organizational standard used by the current digital and/or electronic information management systems.

The organization pattern determines the characteristics of the whole system. The information provided by current telecommunications systems is defined by a linear ordering pattern that limits their operating capacity.

Current computers use binary logic for information processing and storing. We will call this type of computer "classic computer". Binary logic is characterized by the use of only two independent statuses in order to form its operations base. These two statuses are usually represented by 1 and 0, and they support the basic unit of information, called "bit". This information bit can be physically supported in several ways.

At the start of computer science, the rudimentary calculating machines used punched paper rolls or cards in order to store information. A mechanical scanner was able to distinguish between a hole and a space without a punch when reading the corresponding section of the card. The space where a hole was punched corresponded to a bit of information. If there was a hole, the bit was a 1, if not, a 0. Those old bits took up several millimetres on the paper. With technology development, information storage systems have evolved in line with reading systems and the requirements of more and more complex software programs.

Now information is stored in optical or magnetic discs, where up to thousands of millions of bits can be stored in the same space that an old one used to take. In optical discs a bit is supported in a minute space of the disc's substratum. Endless successions of perforations and opaque spaces can be read by the scanner's laser beam. Nowadays an "optical" bit can take up just a few angstroms, as the media surfaces can be handled at microscopic scale. For the routing of information it is necessary to establish the behaviour of the energy flows at microscopic scale when the particles are polarized during the information processing procedure in the computing systems.

All in all, the limits of binary computing system development depend on the costs in terms of time, the costs of information recovery and of the miniaturization of circuits, which seems to be reaching its technical limit, amongst other reasons due to the heat resistance capacity of the integrated circuits. The use of new media, compatible with the current ones, is based on the knowledge and/or modelling of the route or behaviour of the energy flows in the CPU, and on the fact that such behaviour can be represented and made operational with the minimum possible number of digits and/or operations. This requires finding a new ordering system, which is what this invention is all about, and one which falls within the field of quantum mechanics.

From the beginning of the twentieth century it was known that the energy of a quantum system is "quamtumized", that is, not all states of energy are possible. The particle's magnetic momentum can change its orientation jumping the anisotropy barrier but this state cannot take any possible orientation, only those corresponding to the possible energy states. Therefore, we have a discrete set of energy levels corresponding to the possible orientations of the magnetic momentum in relation to the particle's anisotropy axis.

More advanced studies of this phenomenon lead to the discovery of the "magnetic resonance tube effect", which confirmed the quantum theory according to which the tunnel effect is caused by the overlaying of opposing orientation levels of a particle's magnetic momentum. These studies were carried out with organic molecules that had a magnetic nucleus and were all identical to each other. As a result, they all behaved as one, amplifying the magnetic phenomena they provoked. In this environment, there are accelerations of the speed at which the magnetization moves towards its equilibrium state (maximum or saturation magnetization) each time the field value corresponding to the alignment of the levels of the magnetic momentum's orientation. These fields are equidistant from each other, as anticipated by the theory. This means that we can tune the tunnel effect to our convenience.

To make this easier to understand, one can assume that a computer is a device that converts an incoming signal, input, into an outgoing signal, output, following certain rules. To assess an f function in a classic computer, we enter an x1 input and we obtain an f(x1) output as a result. If we want to assess another input, x2, we will have to run the program again in order to know the result, f(x2), and so on. In a quantum computer, though, we could prepare as the initial state a linear overlaying of the x1, x2,..., xN states, run the program once and obtain a linear overlaying of the f(x1), f(x2),..., f(xN) states as a result. Thanks to this, some operations such as factorizing a large number into prime numbers (message encoding), generating random numbers, simulating physics or engineering problems, the quantum communication between distant computers, sending undecipherable information, etc., are processed much more efficiently.

The exploration of the electrons' dynamics in a metallic surface is a challenge of basic research, but it is also important to many electronic applications and even in the development of quantum devices. There have been attempts at finding solutions in this field, but up to now they have not been practical at an industrial level.

Many materials and structures that are useful for technology already have regular patterns. For example, a computer's monitor screen has a regular grid of tiny phosphorous dots that glow when they are torpedoed with an electron beam. Behind the dots there is a mesh that protects the dots from the electrons targeted at their neighbours. And deep inside the computer's circuit there are electronic components organized regularly in a microprocessor as the machine's active memory. All the individual elements of these geometric formations have been painstakingly placed one by one: all the holes in the mesh have been marked separately. But, and this is one of the limitations of current systems, as devices and technological structures become smaller and smaller, making patterns like this becomes more complicated and difficult, and therefore, expensive.

On the other hand, the advantages of regular patterns are well known, for example in the petrochemical sector. The natural minerals called zeolites have atomic size frames in which the aluminium, silicon and oxygen atoms organize themselves in scaffoldings linked by tunnels and dotted with cavities. These natural patterns are reproduced in the laboratory and used to increase the octane level of oil.

Other uses of regular patterns are also being searched for, with no success so far; for example for a material able to take in and retain light. During the last decade, physicists realized that materials punched with holes separated by regular spaces could act as photonic crystals through which light cannot penetrate. If the holes have more or less the same size and separation as the light's wavelength, they can disperse the light, thus preventing the light from travelling past even the first row of holes.

In addition, in recent years, scientists specialized in materials have learnt to exploit nature's trick of making templates to manufacture photonic crystals, although they haven't obtained results that can be applied on an industrial scale. One of the techniques consists of allowing tiny silicon or polystyrene orbs in a suspension to form a deposit like the mud in a river. If all the orbs are of the same size, they will pile up in an ordered formation. This is called colloidal crystal. Then, a solid material can crystallize in the spaces left between the orbs, these orbs can then be dissolved chemically or burnt, to leave only the regular mesh.

A different process allows the formations of tiny points or lines of semiconductor material of only a few nanometres (one thousand-millionth of a metre) on a surface. These quantum dots are so small that the laws of quantum mechanics determine their properties (such as the way they react to light). The quantum dots can provide the "neurons" of a memory device able to store information with a density much higher than current computers. In matter at scales of millionths of a millimetre strange quantum effects occur that are imperceptible in everyday life.

Nowadays transistors are used for "routing" information through logic gates; if we model numerically the behaviour of the energy flows that circulate through networks using a recurring and constant cycle, we can use these flows' cycles or routes in order to "route" the information, without using transistors in the CPU, but using other materials instead.

So far, the search for a numeric pattern that responds to cyclic and constant behaviour and is operational has had no success. This is what the present invention has solved. It can be put into practice, for example, in the quantum processing of information in binary or other types of systems.

The key difference between processing information in the quantum world and in the classic one is that the former is not black and white. In a classic computer, all information bits are one thing or the other: either a 1 or a 0. But a quantum bit, a qubit, can be a mixture of both. Quantum objects can exist in an overlaying of states that are traditionally exclusive.

This means that a series of quantum switches - objects in clearly defined quantum states, like atoms in different states of excitation- have quite a few more qubit configurations than the corresponding classic bit series. For example, whilst a classic three-bit memory can only store one of the eight possible configurations of ones and zeros, the corresponding quantum series can store all eight in a overlaying pattern of states.

In order to do this, it is necessary to establish a behaviour or ordering pattern that models numerically the behaviour of the energy flows that occur in the information exchanges. In general, it should correspond to the behaviour of the energy flows in the crystalline structures, as they have regular spatial layouts that are similar to the structures of the crystals themselves. This it what the present invention achieves. Applied as a light insulator, it could be useful in telecommunications; for example, to manufacture optical fibres with a hermetic outside layer that would make it unnecessary to amplify the signal along the line. The photonic crystals can also be used to make circuits that work with light instead of electricity. And they can provide new lasers with much reduced electrical consumption.

Given the dual (wave/particle) behaviour of the energy flows, they are able to establish overlaying states (long range interactions) by establishing deferred structures or connections, malleable within a base matrix or discreet structure.

In short, we can consider that digital electromagnetic environments generate a continuous and virtually three-dimensional time-space plane where the interactions between energy flows go beyond what we can observe in the physical world, having reactions or possible motions that are reproduced or extended up to certain levels following the same pattern within the virtually three-dimensional continuous plane.

The three-dimensional non-linear numerical ordering system extends and improves the current usefulness of digital information management electronic systems, as it generates a new way of creating references within the information volume and between the information and the user; this constant way of ordering information is an inherent part of the new management system, as it establishes a new organization and access pattern in the electronic communication processes that characterize the ordering system. In addition, the ordering system is provided with the required standard interfaces to receive and operate on digital information in current electronic systems.

The three-dimensional non-linear numerical ordering system which is the subject of the present invention has been developed as a solution to the existing problems related to the actual information searching, processing, transferring and storing times. This system is based on the behaviour of natural forces and/or elementary particles, as well as on the cyclic and constant behaviour of those same particles in the electromagnetic fields. The device can be applied to multiple functions in the computer science field, such as programming, software, or as a hardware component built in to different types of microprocessors.

The three-dimensional non-linear numerical ordering system consists of a discrete device or structure for processing digital information through the application of a complex system made up of a series of simple interacting components, which we will call sub-units, able to exchange information with their environment and also able to adapt their internal structure as a result of such non-linear interactions in electromagnetic media.

It is based on a discrete structure, preferably three-dimensional, where the elements contained or represented in such a structure are ordered and classified non-linearly. This is done by means of symmetry operations applied in such a way that, integrated into a standard electronic, electromagnetic or other type of information processing system, it is able to operate with 512⁸ information points in continuous or virtual mode or preferably in real time mode. The result is a computationally irreducible system, based on an isotropic unit pattern structure, that we will call unit structure or matrix, and has fractal characteristics and/or properties in electromagnetic environments, modelling and/or representing numerically the behaviour of the energy flows in electromagnetic media.

The initial structure is a cubic structure where each of its three axes is divided into eight equal segments numbered, for example, from 0 to 7 in octal (base 8) notation from the origin of coordinates. Consequently, the pattern structure is divided into 512 equal sub-units, identified by three digits, each of which being the coordinate segment that represents its location in relation to the Z, Y, X axes that define the structure. Digits 000 will thus identify the subunit that represents the origin of coordinates; digits 100, 010, 001 will identify the adjacent sub-units in the three axes and so on until the 8³ sub-units are completed. The last subunit (number 512) will be defined, always following in octal (base 8) notation, by the digits 777. Based on that ordering, we carry out certain symmetry operations in order to establish a non-linear ordering within the structure characterized in that it presents the same constant route and behaviour cycle in the three coordinates, establishing an isotropic behaviour in the structure.

The fractal behaviour, which can also be observed in nature, contains a series of properties that allow us to infer the existence of constant behaviour or motion of energy flows in electromagnetic media, within discrete limits. Taking advantage of such circumstances inherent to the electromagnetic environments, we define a fourth coordinate with a similar behaviour to the three coordinates that defines the unit pattern structure, and that we have divided into 512 sub-units. Physically, the discrete limit is the object itself; the limit of possible interactions between the energy flows that interact in electromagnetic environments is determined by the diffuse structure, modelled numerically as previously explained; with eight possible values in each of the four coordinates and an established non-linear order in the unit pattern structure. We can operate on the whole volume of information contained and/or represented in the system using the minimum possible number of digits and the minimum possible number of operations using the three-dimensional non-linear numerical ordering system, as the structure has the same behaviour from any (given) point of view; that is, it is isotropic. Taking advantage of the properties presented by the energy flows' fractal behaviour in electromagnetic environments, we can operate simultaneously with a volume of information uniformly structured and can handle it using the minimum number of digits.

If the non-linear three-dimensional ordering system is integrated into a standard computing system, giving the ordering system the relevant computing specification, it optimizes the processing of any information in electromagnetic environments, allowing new applications as it connects and allows to represent and access hierarchically to the information contained in the resulting diffuse and discrete structure, based on the isotropic pattern unit structure.

Thanks to the constant behaviour obtained after the establishment of the non-linear order in the structure, we can tessellate, percolate or go through the whole volume of information represented and/or contained in the diffuse structure referencing it, preferably in the unit structure and in virtually real time in electromagnetic environments, optimizing the number of digits required to operate on a volume of information in the order of 512⁸

The system extends and improves the current usefulness of digital information management electronic systems, as it generates a new way of creating references within the information volume and between the information and the user, the constant way of ordering the information (expressed by the three-dimensional non-linear numerical ordering system) being an inherent part of the new management system, as it establishes a new organization and access pattern in the electronic communications systems that characterizes the system.

The system, as well as being operational with the current binary systems, can be used in systems currently under development (quantum and/or photonic computers) as it is based on the modelling of the behaviour of the energy flows in electromagnetic environments, representing all the possible interactions between the elements considered in the system.

When integrated in digital communications programs and circuits, it is ideal for managing multimedia information in real time or for managing highly complex information, as it establishes a feedback system that generates, based on the unit-structure, a reference system through which we can identify and consequently operate with the information defined in the system, using the appropriate specifications, continuously accessing any of the possible information points represented by the sub-units, virtually in real time.

It optimizes computing systems by reducing the number of digits required to identify and operate with information volumes, being able to represent hierarchically the connections that can be established between the information volumes considered in the sub-units, the number of possible sub-units integrated in the system being in the order of 512⁸

It improves the processing and management performance of computing systems, as it provides higher storage capacity and quicker access. It relates and contextualizes the information with other "information packets" dynamically, offering an operational, preferably three-dimensional, topography or virtual map of information.

The simplicity and optimization of the systems used and the capacity to represent a conceptual model allow the application of this invention in multiple fields as a way of establishing dynamic relationships within electronic equipments with applications on conceptual and material realities.

It is an instrument that establishes relationships between user-defined parameters in each of the three coordinates that define the unit structure and that can be extended following a fractal model.

When integrated in a microprocessor, it acts on the computer's hard drive, improving its memory capacity and speed, defining a new communications system. When applied as a program, it acts on the information in the networks as if it was a filter integrated into a server and/or receiver, allowing definition of the volume and/or qualities of the information with enhanced accuracy.

It establishes relationships between volumes of information, making them accessible hierarchically, forming new chains of more accurate meanings that can be represented and accessed in a structured manner and that are related within the unit structure.

It optimizes the classification of data as it defines it simultaneously from various potential levels of relationship and minimizes the "noise" in digital systems.

This is why it is able to generate conceptual information bases with a capacity and definition level extraordinarily superior to the current ones. Because of this, it is considered simultaneously as a device to organize and manage the computer's hard drive; as a device or system of classification and three-dimensional representation of information in electronic telecommunications equipments; as a multimedia conceptual information base manager; as a system of encoding and encryption for transfer of digital information; as a system of information compression for storage or transfer; or as a searcher in interconnected networks.

The system is a device for ordering, relating, storing and accessing information, that works within the characteristics of the computing environment based on auto-poietic, non-linear and cyclic ordering, established within an isotropic and preferably cubic structure, with fractal properties and that presents a cyclic and constant behaviour from any of the three axes that define the unit structure.

More specific applications include, amongst others:

HARDWARE:
- Computer hard drive organizing system
- Computer memory managing system
- Information compressing device that can be used when storing or transferring information
- Encoding and encrypting device that can be used when transferring digital information

SOFTWARE:
- Multimedia information manager in fields such as multimedia information base management or multiple signal control via satellite
- Searcher in interconnected networks
- Three-dimensional classification and representation system
- Electronic equipment control system
- Monitoring system (medical etc.)
- Message connection, encoding and exchange in electronic communications equipment (management protocols, etc.)
- Conceptual (knowledge oriented) information base manager, as a new information organization method
- Management and artificial intelligence applications, such as:
   - Tool for ordering the genome, and its evolution based on the minimal significant elements (acids).
   - Tool for controlling nuclear power stations and radioactive waste treatment
   - Tool for airplane manufacturing and controlling the aerodynamic behaviour of flying airplanes

To better understand the subject of the present invention, the optimal assembly is represented in the annexed plan. In this plan:
Figure -1- shows the initial basic structure with its origin of coordinates, as well as the divisions and values assigned to them.
Figure -2- shows the initial basic structure divided into 512 sub-units.
Figure -3- shows the initial basic structure with the initial origin of coordinates subunit and its adjacent sub-units, as well as the location of the last subunit.
Figure -4- shows the initial basic structure with the first face values corresponding to coordinate -z-; z 0.
Figure -5- shows the initial basic structure with the second face values corresponding to coordinate -z-; z 1.
Figure -6- shows the initial basic structure with the third face values corresponding to coordinate -z-; z 2.
Figure -7- shows the initial basic structure with the fourth face values corresponding to coordinate -z-; z 3.
Figure -8- shows the initial basic structure with the fifth face values corresponding to coordinate -z-; z 4.
Figure -9- shows the initial basic structure with the sixth face values corresponding to coordinate -z-; z 5.
Figure -10- shows the initial basic structure with the seventh face values corresponding to coordinate -z-; z 6.
Figure -11- shows the initial basic structure with the eighth face values corresponding to coordinate -z-; z 7.
Figure -12- shows the initial basic structure with the subunit groupings corresponding to coordinate X.
Figure -13- shows the initial basic structure with the subunit groupings corresponding to coordinate Y.
Figure -14- shows the initial basic structure with the subunit groupings corresponding to coordinate Z.
Figure -15- shows the initial basic structure with the value of the sub-units located at each end.
Figure -16- shows the reflection of coordinate -x- on the symmetry plane with its end values.
Figure -17- shows the reflection of the end values of coordinate -y- on the symmetry plane, based on the previous figure.
Figure -18- shows the reflection of the end values of coordinate -z- on the symmetry plane, based on the previous figure.
Figure -19- shows schematically the initial basic structure, with another possible symmetry operation to establish the non-linear order.
Figure -20- shows schematically the initial basic structure, with another possible symmetry operation to establish the non-linear order.
Figure -21- shows schematically the initial basic structure, with another possible symmetry operation to establish the non-linear order.
Figure -22- shows schematically the initial basic structure, with another possible symmetry operation to establish the non-linear order.
Figure -23- shows the values established in the unit pattern structure corresponding to coordinate -z-, first face; z 0.
Figure -24- shows the values established in the unit pattern structure corresponding to coordinate -z-, second face; z 1.
Figure -25- shows the values established in the unit pattern structure corresponding to coordinate -z-, third face; z 2.
Figure -26- shows the values established in the unit pattern structure corresponding to coordinate -z-, fourth face; z 3.
Figure -27- shows the values established in the unit pattern structure corresponding to coordinate -z-, fifth face; z 4.
Figure -28- shows the values established in the patterns unit structure corresponding to coordinate -z-, sixth face; z 5.
Figure -29- shows the values established in the unit pattern structure corresponding to coordinate -z-, seventh face; z 6.
Figure -30- shows the values established in the unit pattern structure corresponding to coordinate -z-, eighth face; z 7.
Figure -31- shows schematically the fourth coordinate, W.
Figures -32 to 39- show schematically the constant behaviour cycle of the four coordinates, as well as the structure's route, following the same alternate cycle.

The three-dimensional non-linear numerical ordering system being put forward consists of, as can be seen in the figures mentioned above, a digital information processing device that uses a complex system made up of simple interacting components, the sub-units, that are able to exchange information with their environment and also to adapt their internal structure as a result of such non-linear interactions in electromagnetic environments.

It is based on a discrete structure, preferably three-dimensional, where a non-linear ordering has been established, through some symmetry operations that we are going to describe later, in such a way that, integrated in a standard electronic or electromagnetic information management system, makes it possible to operate with 512⁸ information points, in continuous or virtual mode or preferably in real time mode. The system is computationally irreducible; that is, the only way to define or study its development is to leave the system to evolve. It can be put into practice simulating its components, connecting them, specifying the interactions and observing and defining the emerging dynamics. We can consider it a system where there seems to be no order but behind which there is a hidden order. The sub-units are placed at a certain distance from each other, in the three directions of the space, forming a crystalline reticule.

The patterns or models that are repeated in the reticular nodes can be atoms, molecules or ionic groupings, and can vary widely with the type of atom and the layout of the bonds. The different atomic layouts along the different planes or crystalline directions are the cause of vectorial properties. Crystals are formed by the repetition of a structural unit in three dimensions; energy flows behave in a similar way in electromagnetic conditions. The three-dimensional non-linear numerical ordering system models the behaviour of the energy flows in electromagnetic environments, making it possible to operate on the information, taking advantage of the optimized environment characteristics.

Crystalline substances are characterized by the discontinuous, three-dimensional and periodic layout of the particles that form them, without being in contact with each other, but being located at regular intervals in the three dimensions of space, their appearance being a consequence of their inner structure and behaviour.

In order to establish the three-dimensional non-linear numerical ordering system, the initial structure is a cubic system (1) where each of its three axes is divided into eight segments, for example 0 to 7 in base 8, from the origin of coordinates. Consequently, the pattern structure is divided into 512 equal sub-units, identified by three digits, each one of them being the segment of the coordinate that represents its location in relation to the Z (2), Y (3), X (4) axes respectively. The subunit that represents the origin point of coordinates will be identified by the digits 000 (5), and the adjacent sub-units at each of the three axes will be 100 (6), 010 (7), 001 (8), and so on until the 8³ sub-units are completed. The last subunit, number 512, will be defined, always following in base 8, by the digits 777 (9) and will be located at the end opposite the first one, identified by the digits 000 (5), in relation to the structure's symmetry centre.

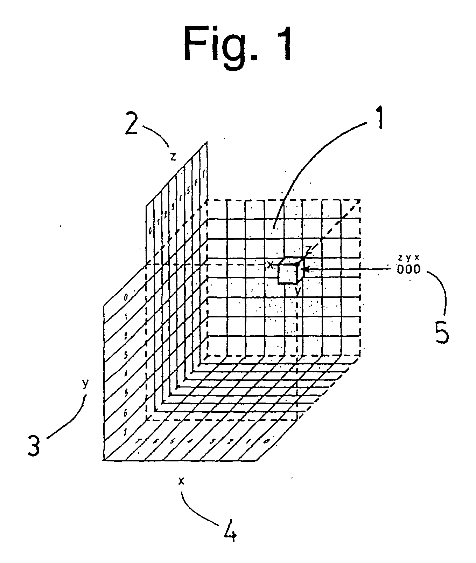

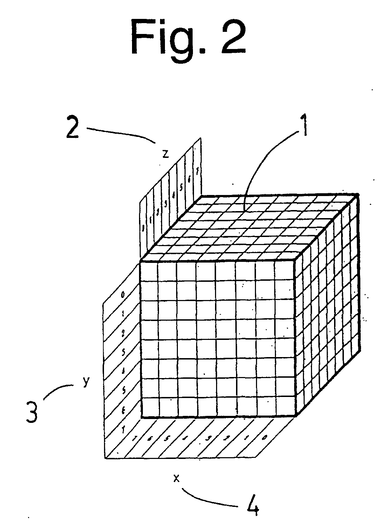

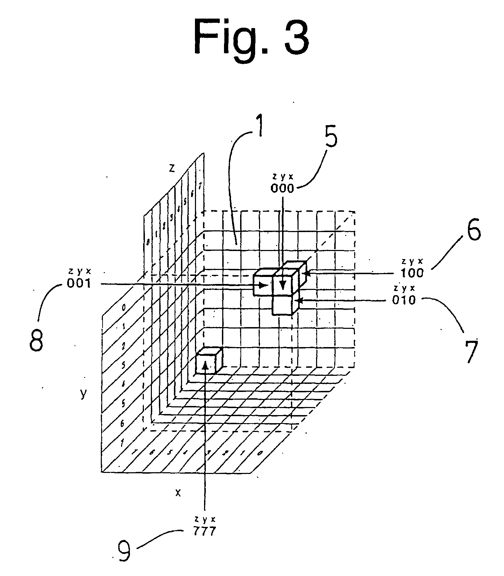

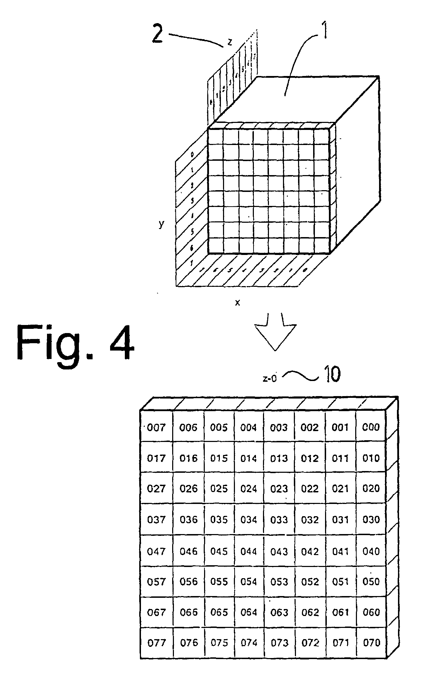

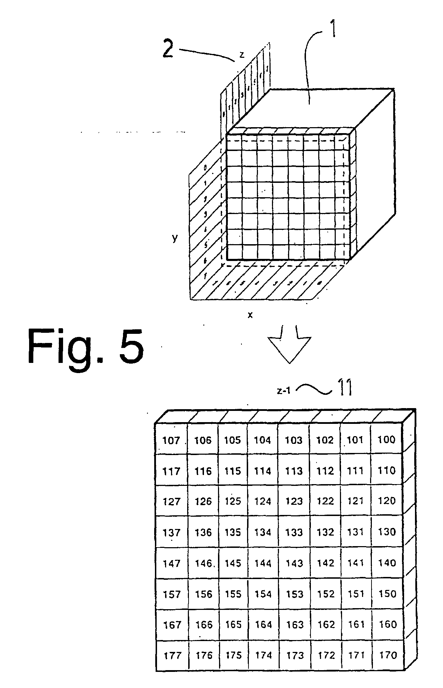

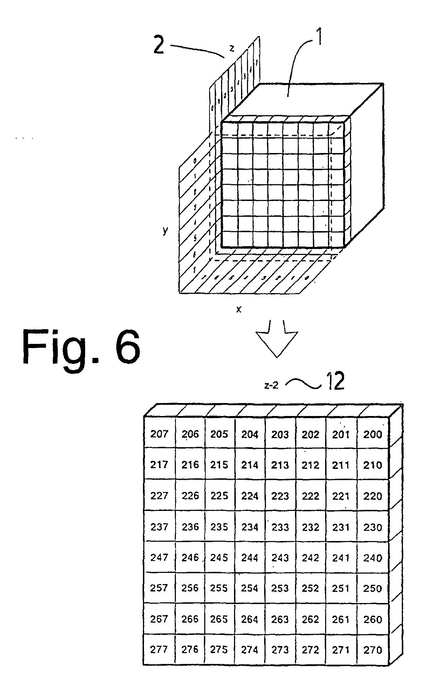

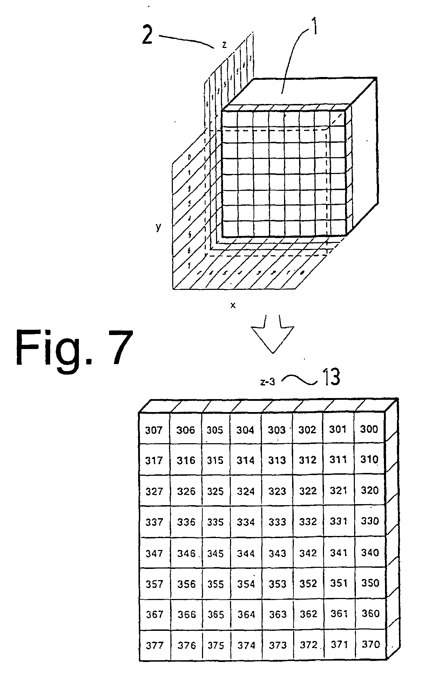

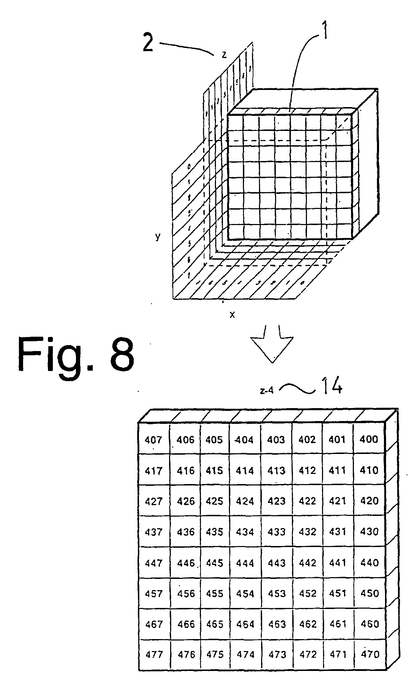

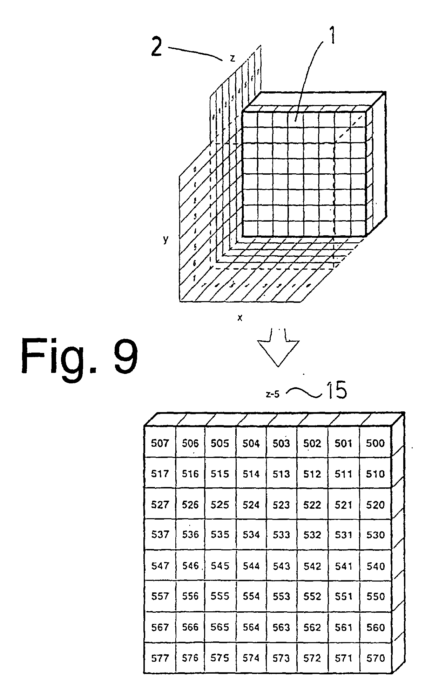

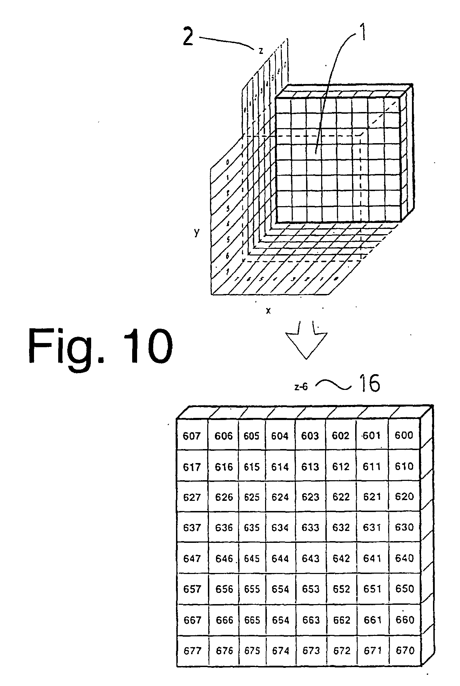

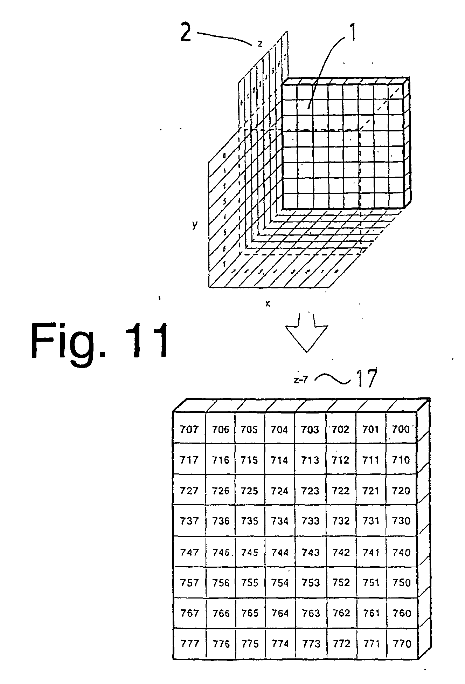

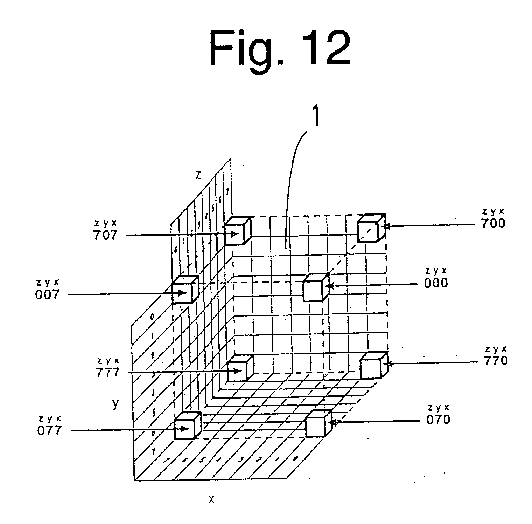

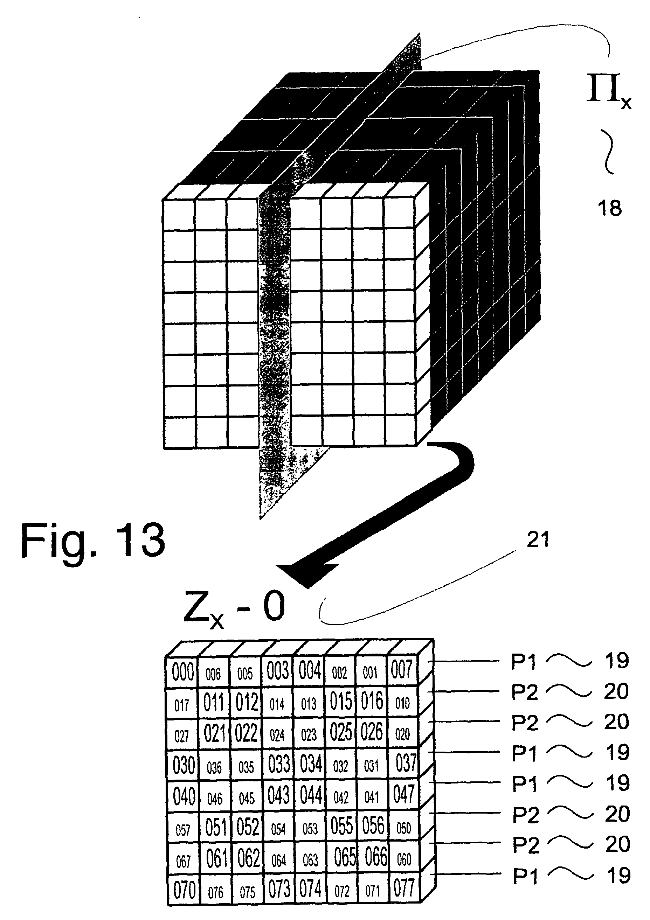

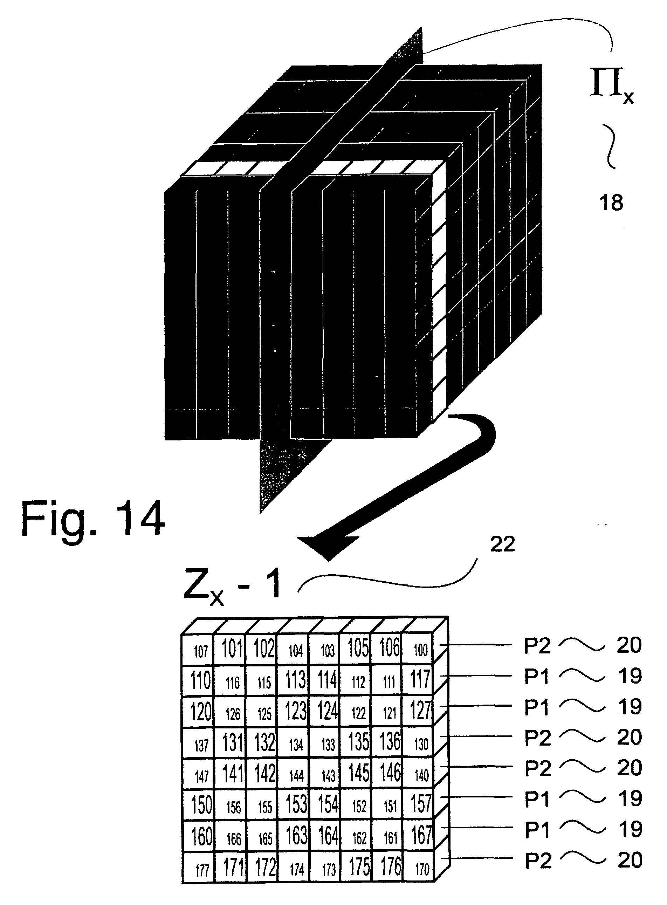

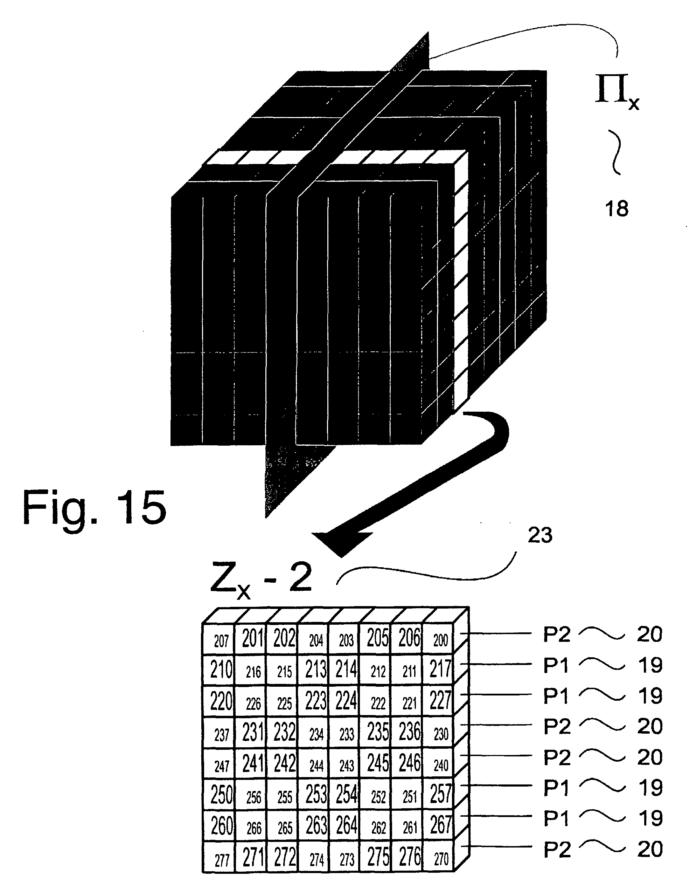

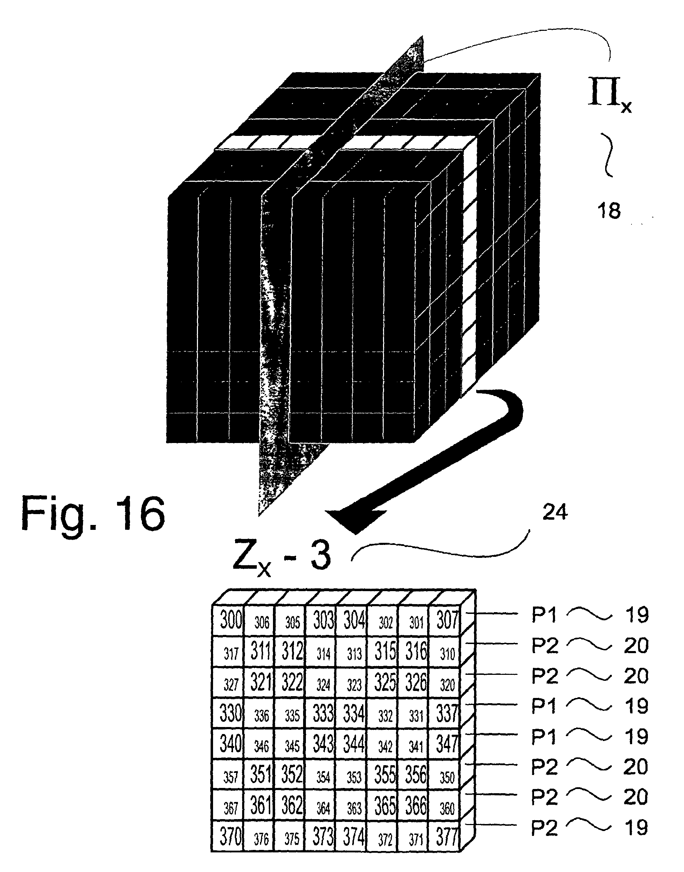

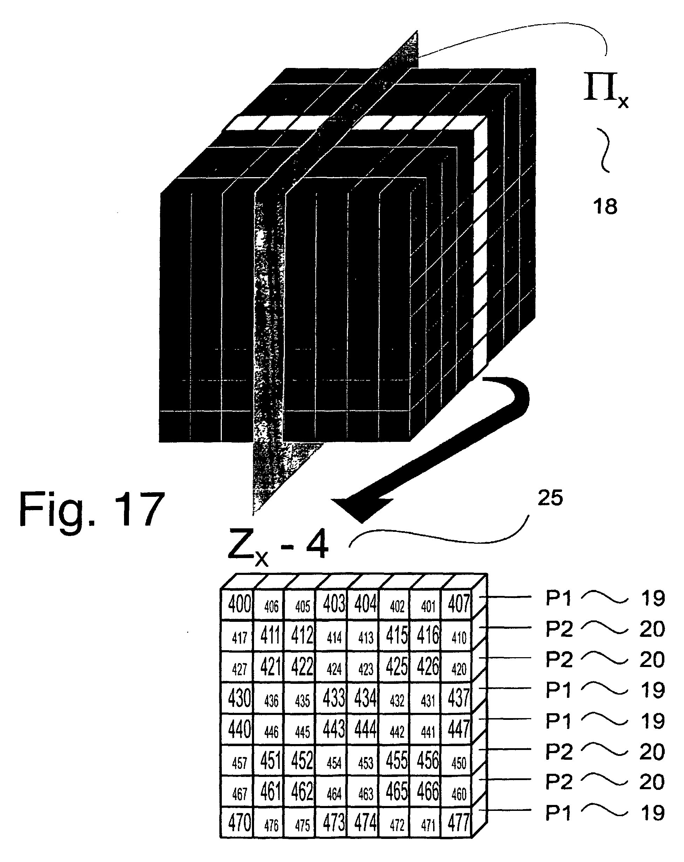

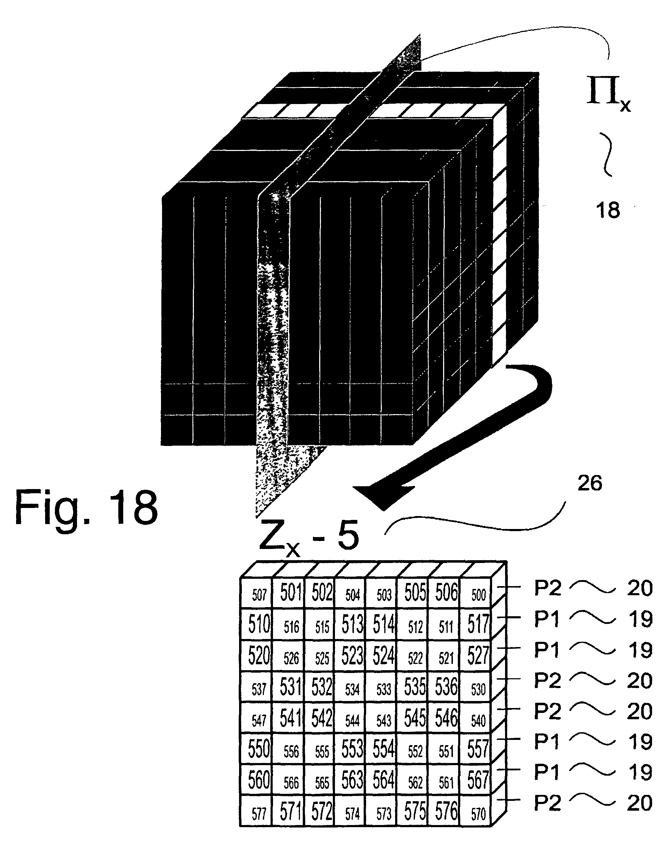

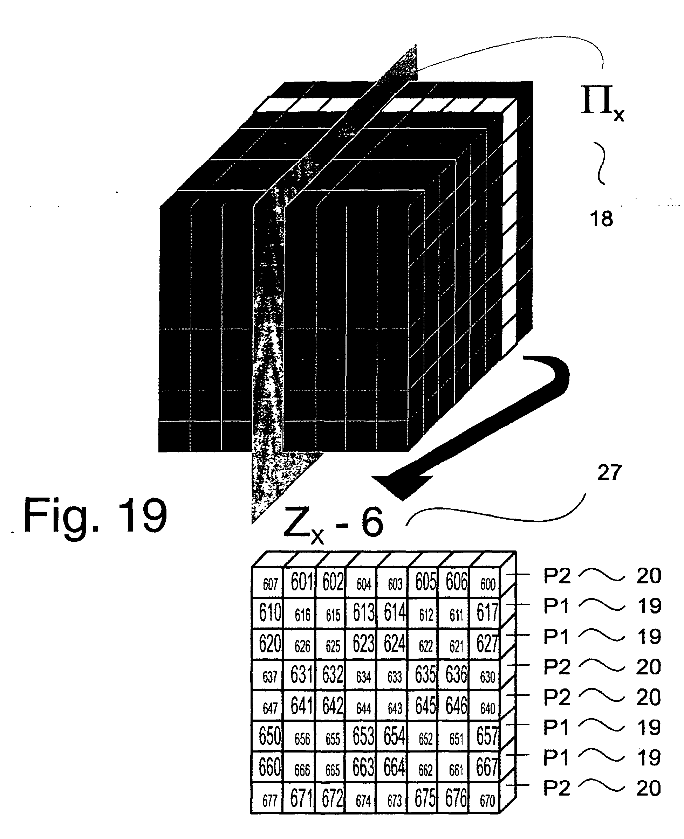

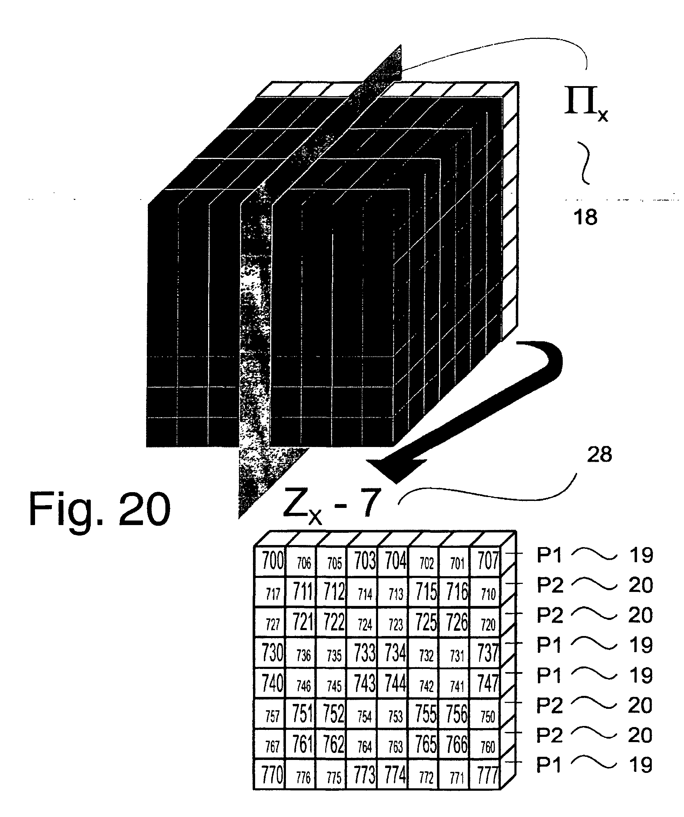

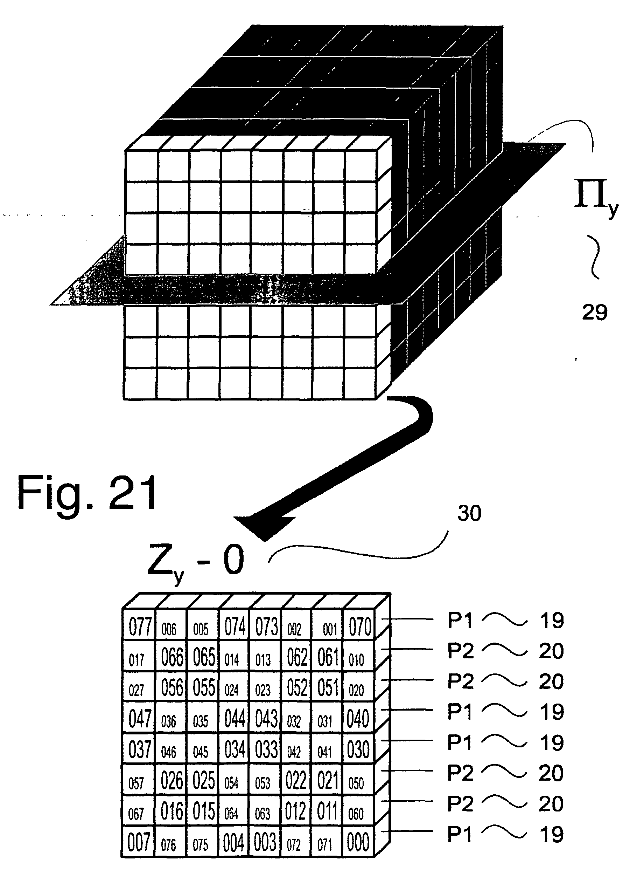

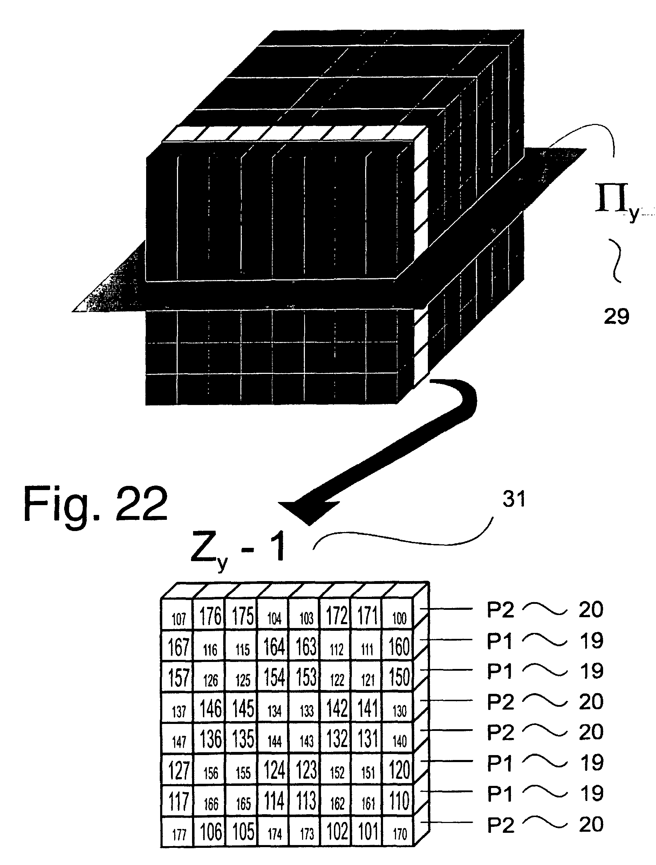

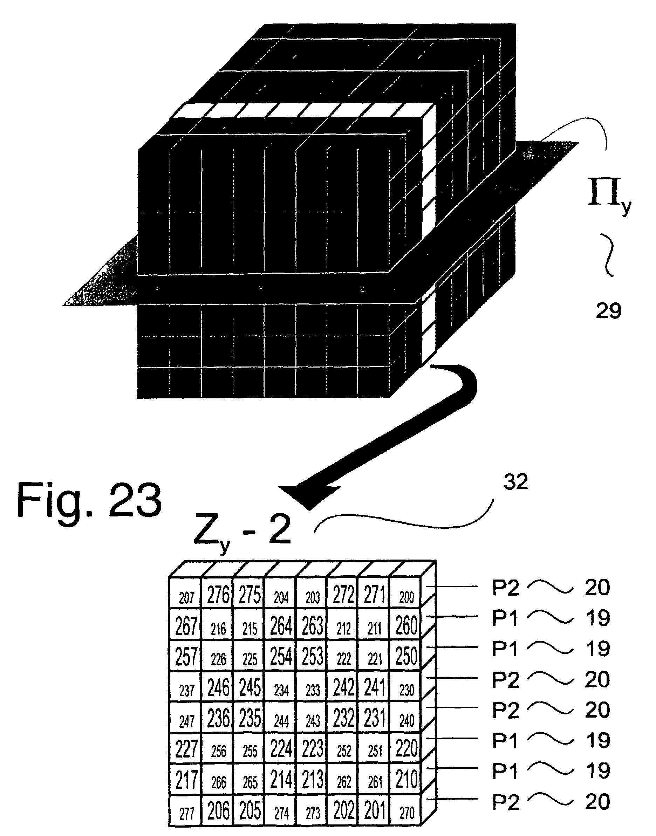

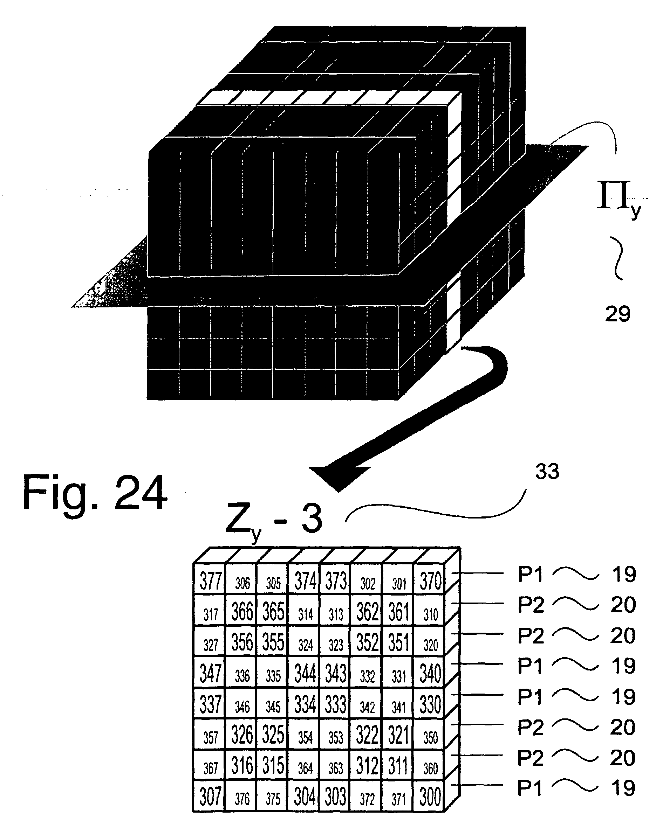

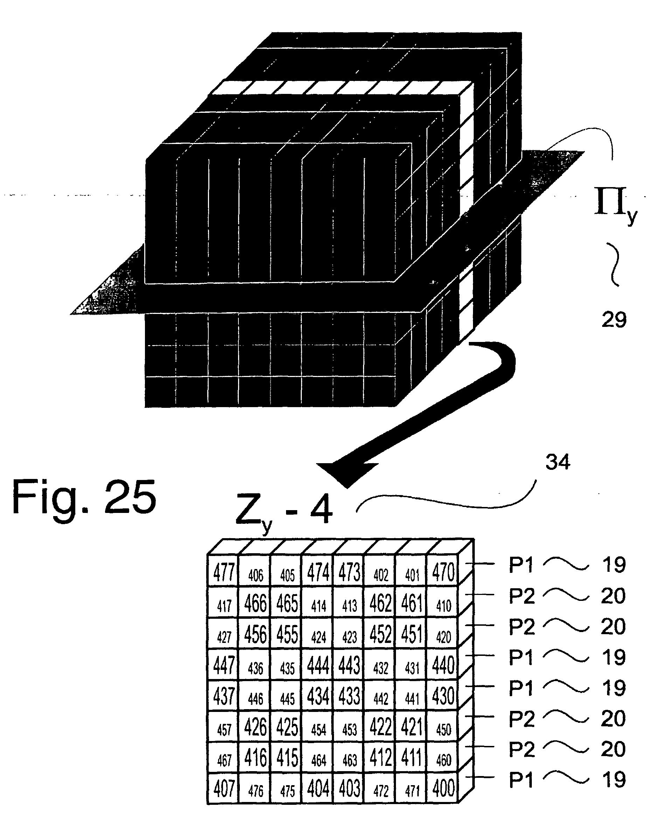

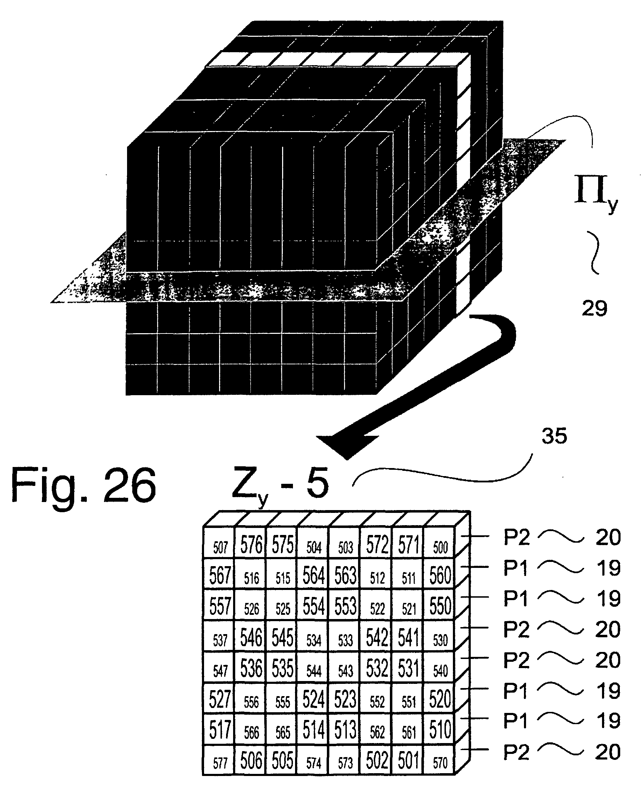

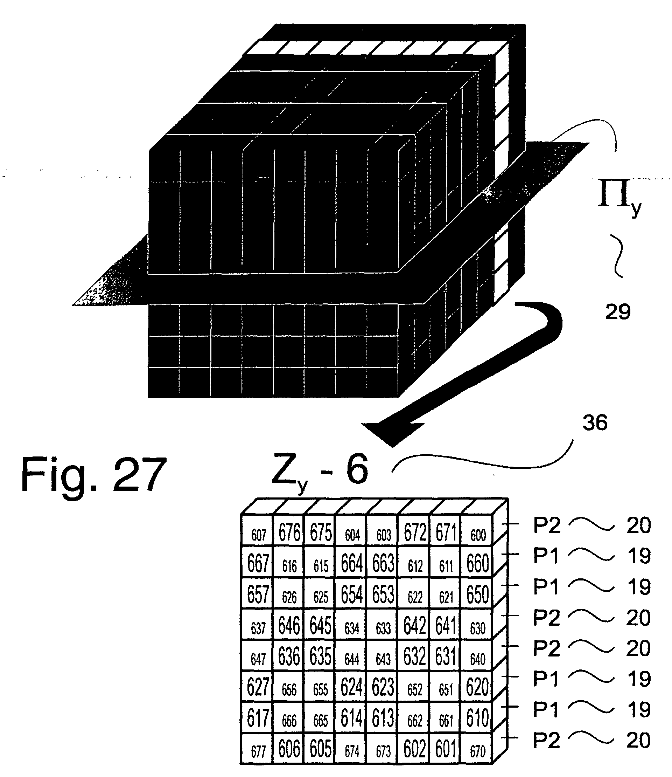

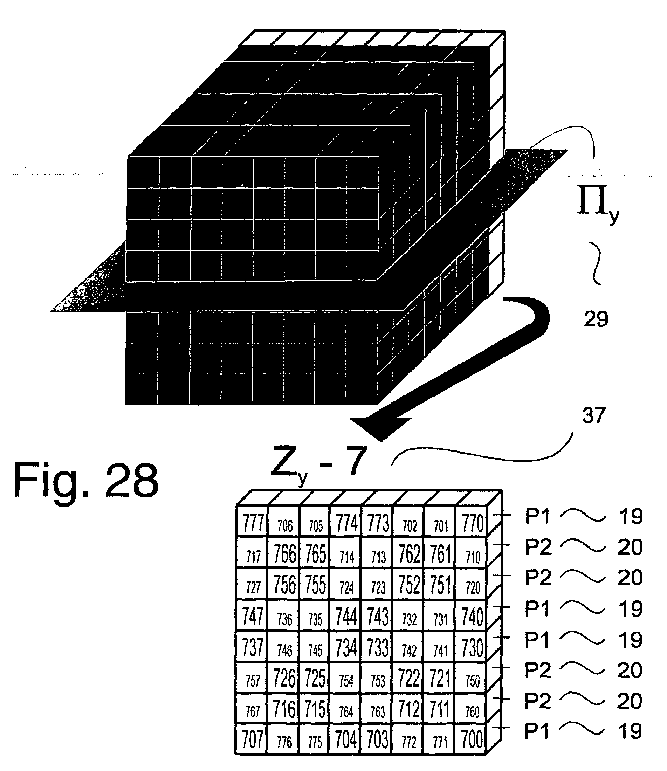

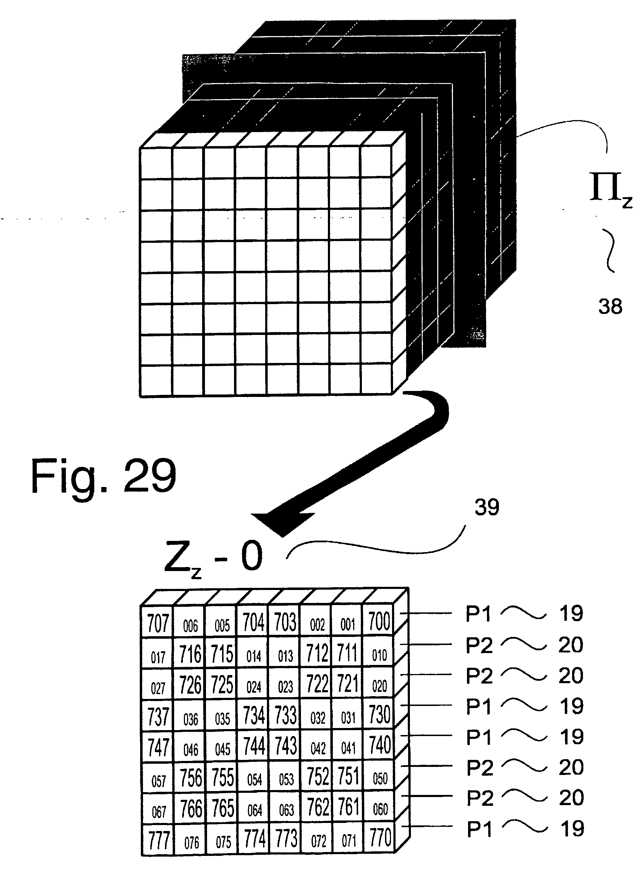

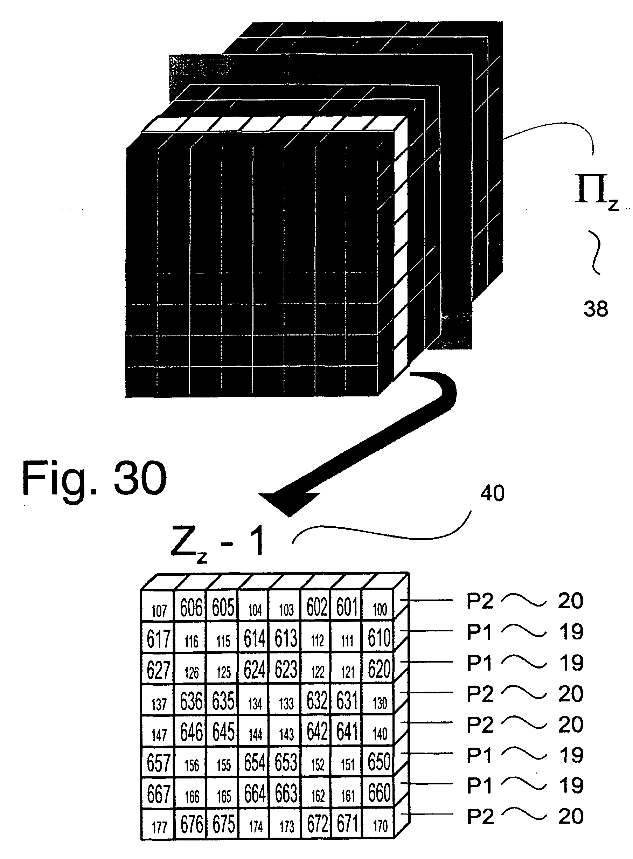

From the origin of coordinates, subunit 000 (5) marked in figure 1, and the 512 sub-units defined by the unit pattern structure (15), marked in figures 23 to 30, are sorted into groups according to a constant sequence: 1 (10), 2 (11), 2 (12), 2 (13), 1 (14), as can be appreciated in figures 12 to 14, a sequence that remains invariable in the three coordinate axes Z (2), Y (3), X (4), as can be appreciated in figure 1, and in the whole of the virtual volume defined in the unit pattern structure (15), as can be appreciated in figures 23 to 30.

Based on the initial structure (1) defined previously, a unit pattern structure is obtained (15), applying preferably a series of symmetry operations that are effective on the odd groups of the previous sequence: G1 (10), G3 (12) and G5 (14) (figures 12 to 14); whilst, the sub-units included in even blocks, G2 (11) and G4 (13), stay invariable. Alternatively, it is possible to obtain the same results carrying out symmetry operations on the even blocks.

The symmetry operations that are applied to the sub-units included in the odd blocks are any of the operations that define the holohedry of the cubic system, as we have defined the structure as a regular cube. Therefore, these operations can preferably be:
Three successive reflections in relation to the three symmetry planes of the cube, all of which are orthogonal to its faces (16)
Three successive turns in the same direction, each one in relation to one of the three symmetry binary axes of the cube (3E⁴) (17)
Four successive turns in the same direction, each one in relation to one of the four symmetry ternary axes of the cube (4E⁴) (18)
Six successive turns in the same direction, each one in relation to one of the six symmetry binary axes of the cube (6E⁴) (19)
An inversion in relation to the symmetry centre of the cube (20)

The result is independent from the starting point of the coordinates 000 (5) whatever its location is, as long as the said block sequence [1 (10), 2 (11), 2 (12), 2 (13), 1 (14)] is respected in each of the three coordinates, as well as in the unit structure defined as the pattern (15).

Preferably through these or other equivalent operations, we establish a non-linear ordering within the initial basic structure (1), obtaining as a result the unit pattern structure (15), within which, we relate all the sub-units included in it, as the defined three-dimensional non-linear numerical ordering system establishes all possible symmetries and connections between the elements integrated in the unit structure. This is possible through the establishment of a constant behaviour or route cycle in each of the coordinates, as well as in the ordinal route of the unit pattern structure (15), from subunit 000 to subunit 777 (21).

The fractal and cyclic behaviour of the unit pattern structure (15), preferably three-dimensional in electromagnetic and/or electronic environments, gives it the fractal properties that allow us to connect all the elements integrated in the unit pattern structure (15), as, thanks to the three-dimensional non-linear numerical ordering, they are related every 2, 4, 8, 16, 32, 64, 128, 256 sub-units, in such a way that we can operate on the 512 sub-units simultaneously, that is, with the unit pattern structure (15) as a whole.

Due to the relationships system established and to the similar behaviour from all points of view, we can order the structure from any of its sub-units, but maintaining the same constant cycle.

The constant behaviour of the three coordinates, as well as their fractal or recurring character, make it possible to define and operate on a fourth coordinate, W (22), with the same behaviour as the three coordinates that define the unit structure; that is, with the same behaviour sequence 1 (10), 2 (11), 2 (12), 2 (13), 1 (14). This fourth coordinate, with the same characteristics as the previous ones, allows us to define 8 consecutive fractality levels in each of the 512 sub-units defined in the unit structure.

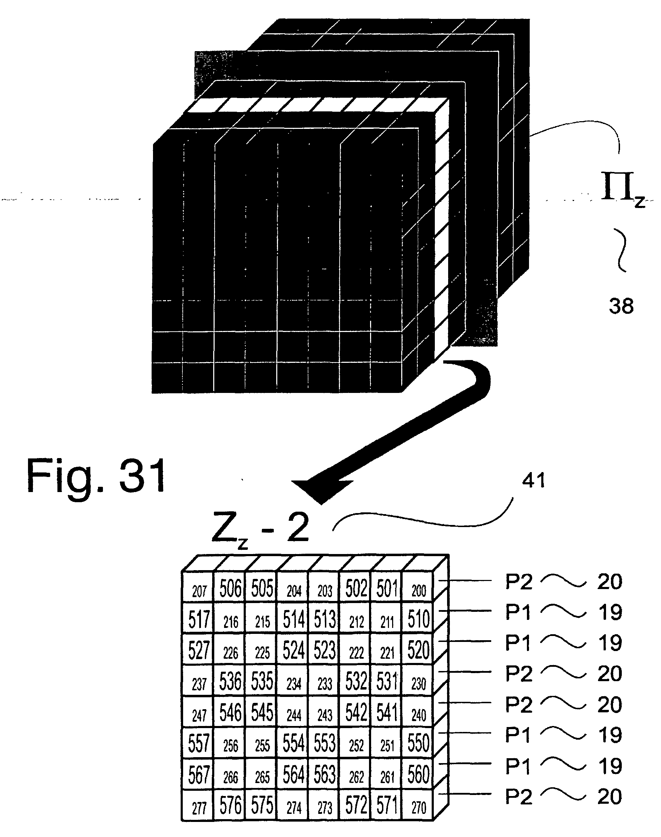

The unit structure's fractal property or characteristic does not change as long as the motion through the successive levels of the structure is horizontal, which means that the successive route is: 512 elements or sub-units in the first level, 512² elements in the second level, 512³ elements in the third level and so on until the eighth level that will contain 512⁸ elements. To pass from the last element of a certain level -X- (subunit 777^{x} in base 8) to the first one of the next level (subunit 000^{x+1}) the same symmetry operation is applied, and therefore, the fractal characteristic is respected (fig.31).

The fractal behaviour, which we can also observe in nature, presents a series of properties that allow us to infer the existence of a continuous motion within certain discrete limits. As far as physics is concerned, the discrete limit is the object itself; the limit of possible interactions between the energy flows that interact in electromagnetic environments corresponds to the diffuse structure, modelled mathematically with the minimum number of digits and operations using the three-dimensional non-linear numerical ordering system.

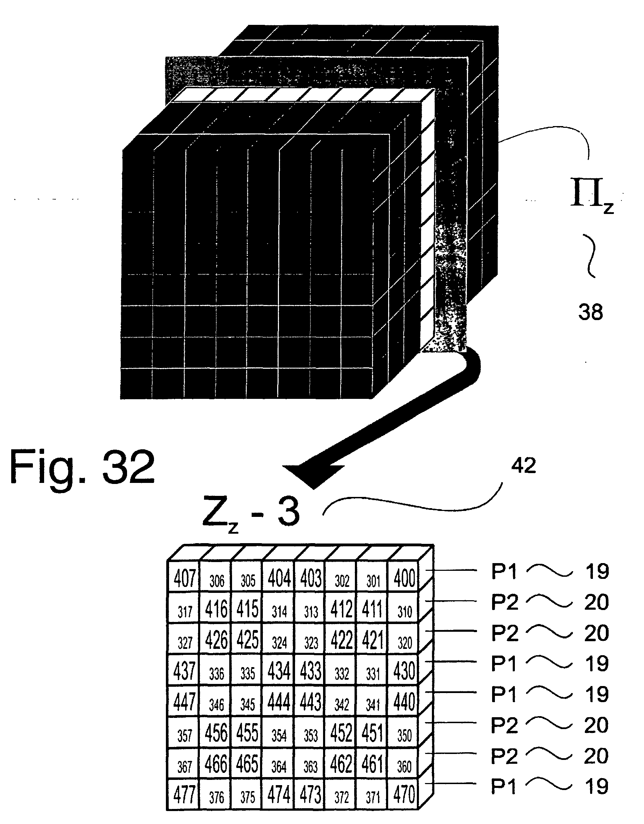

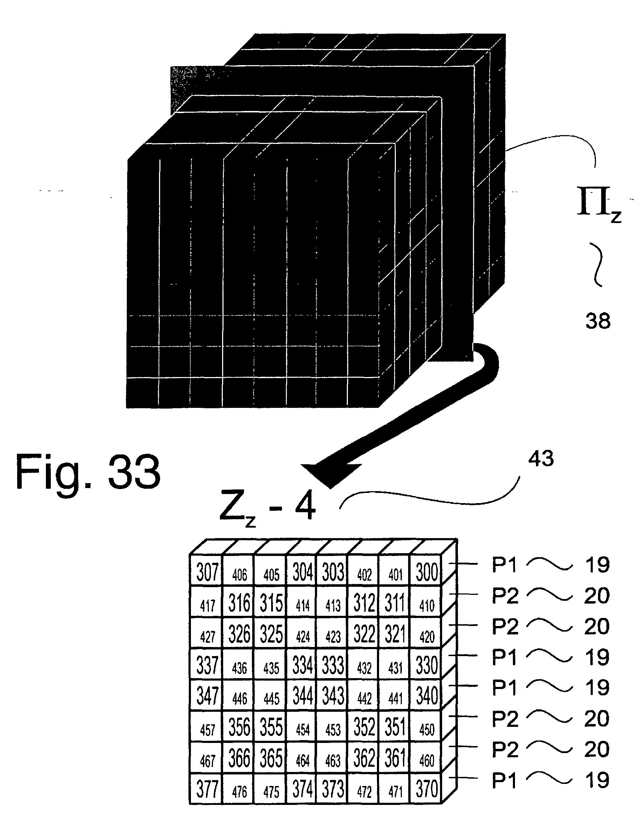

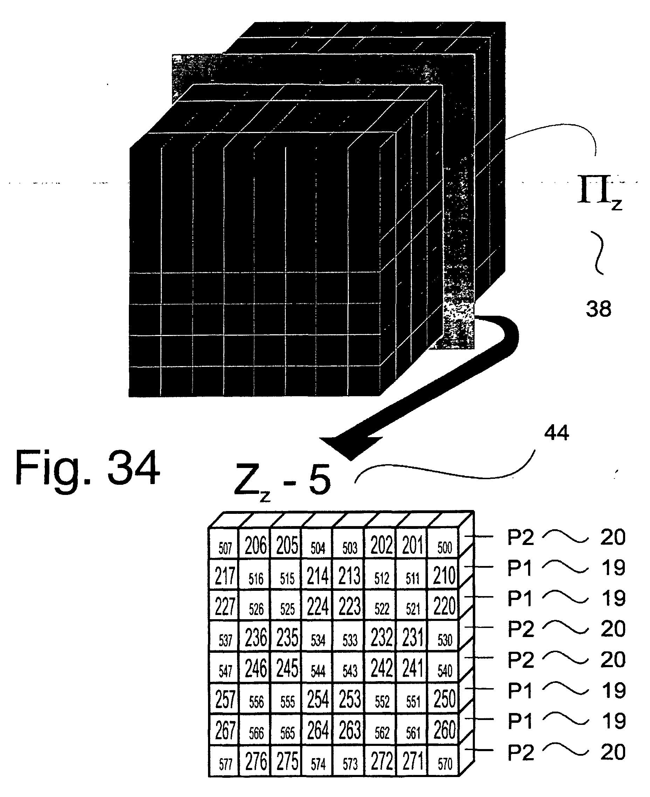

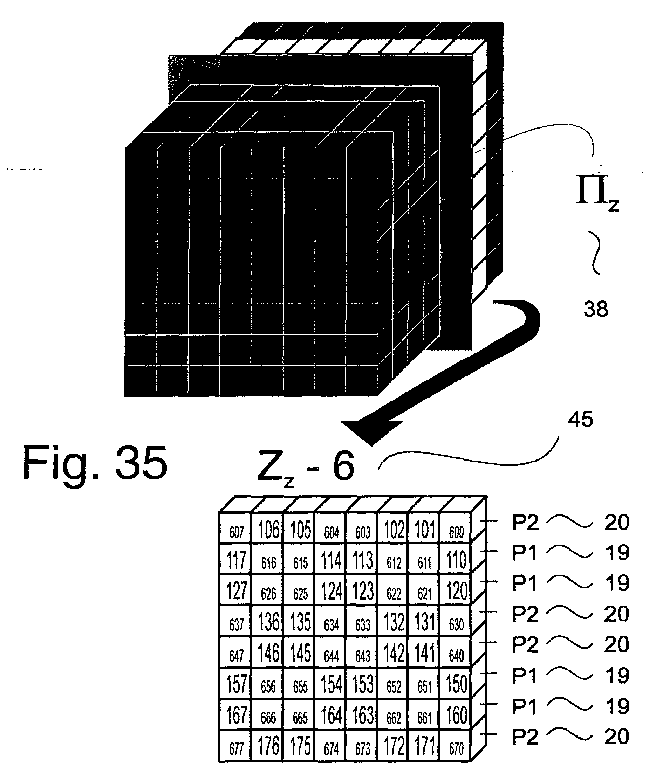

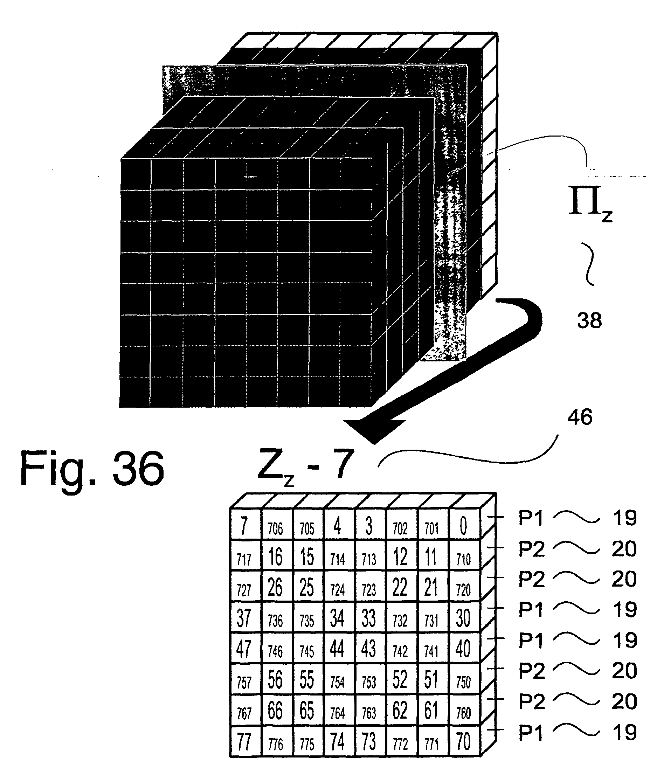

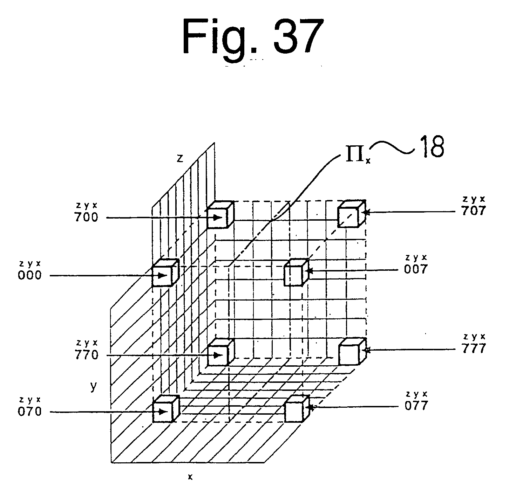

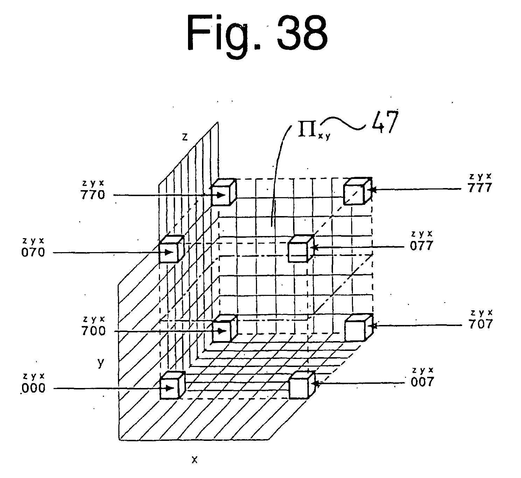

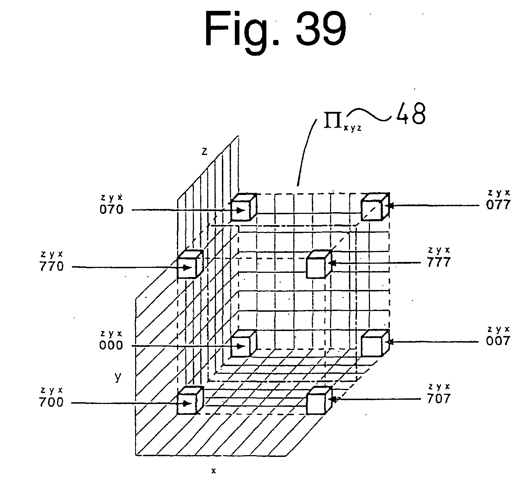

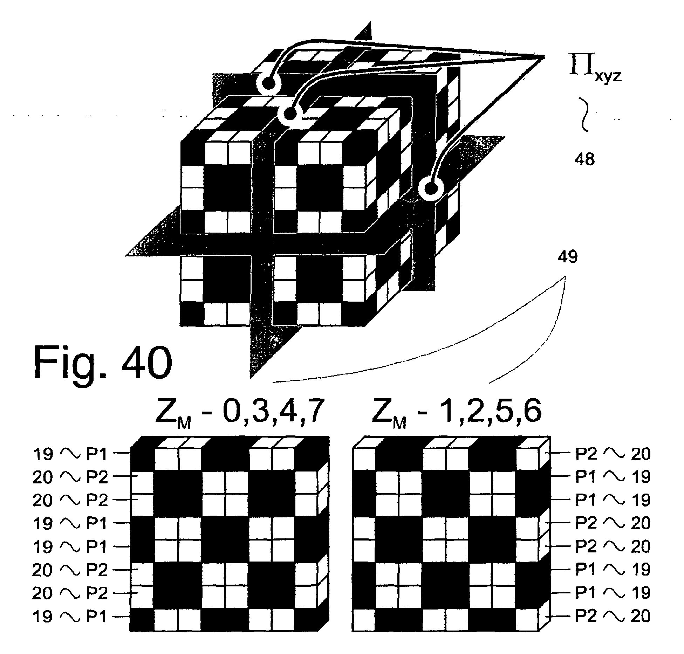

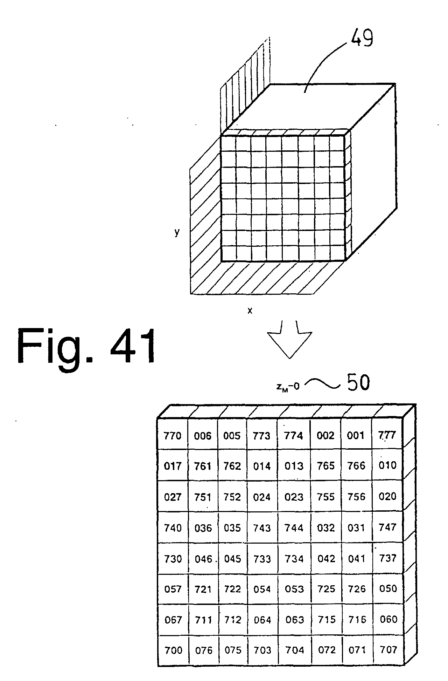

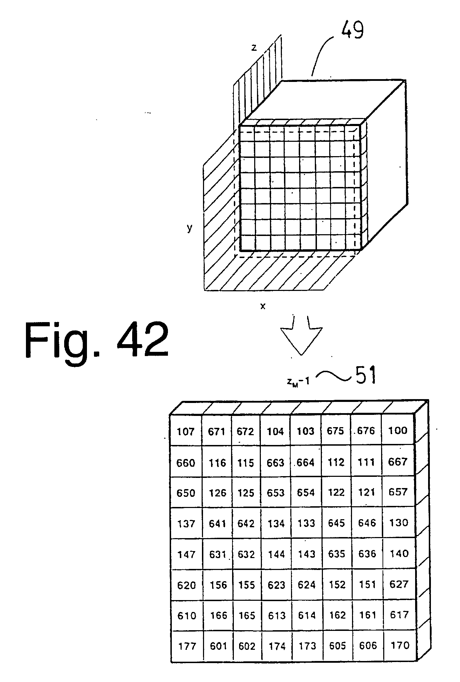

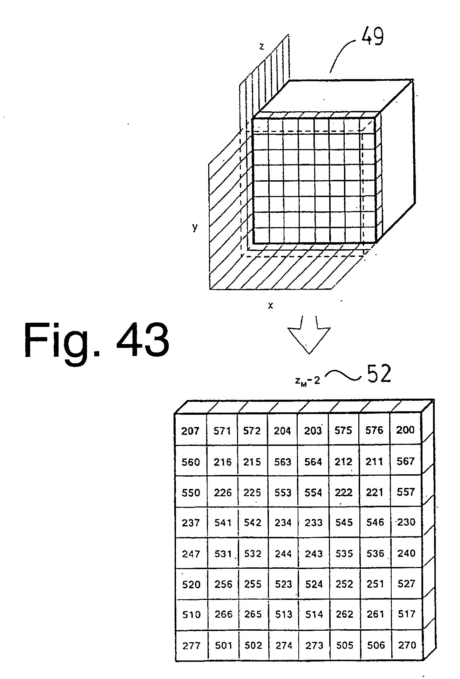

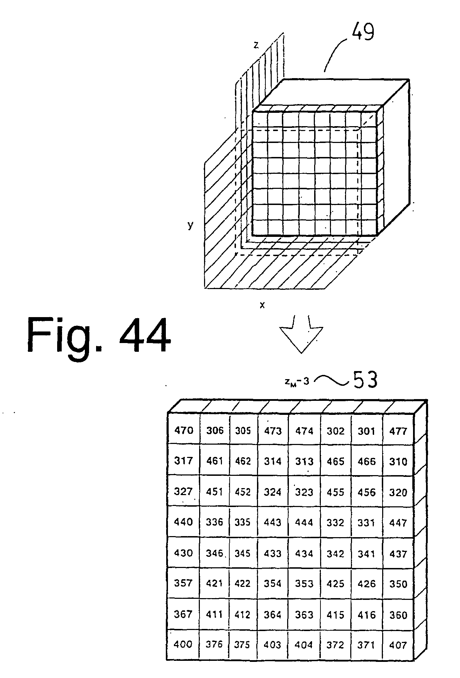

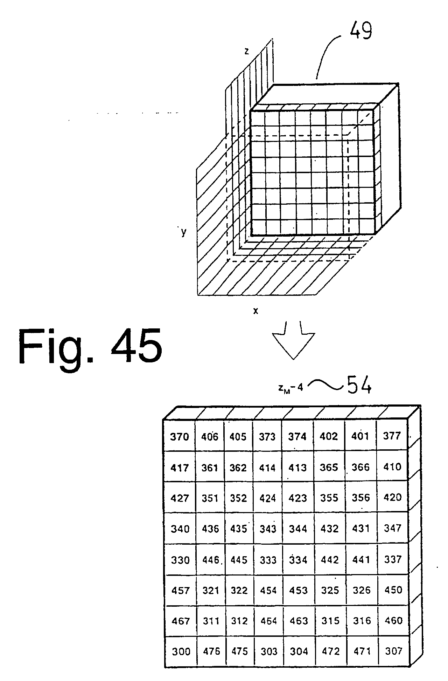

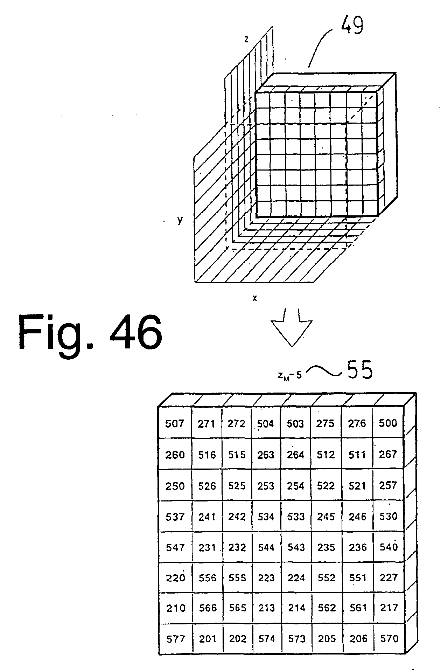

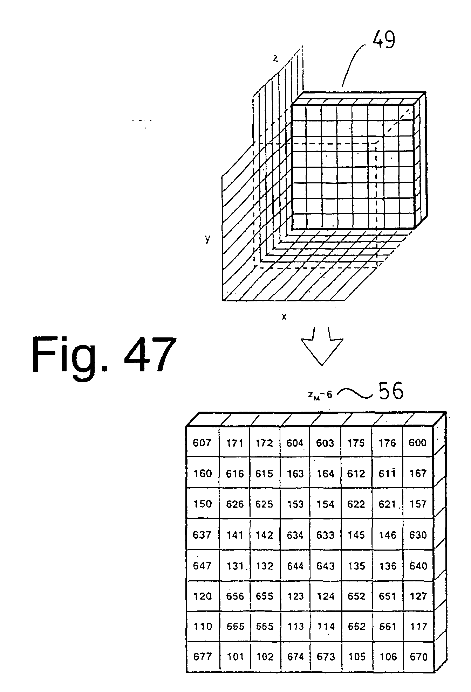

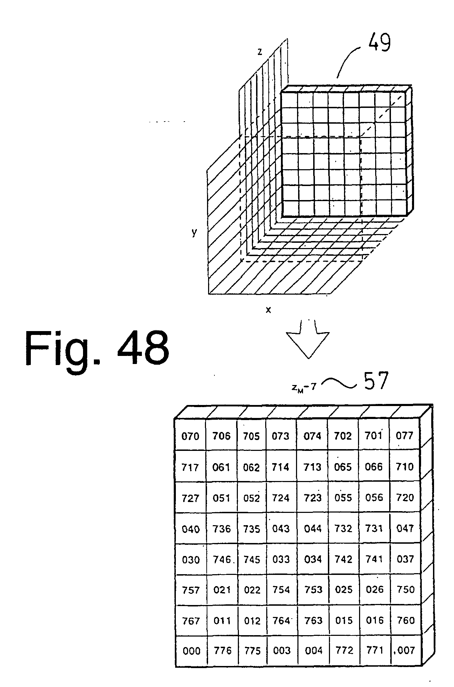

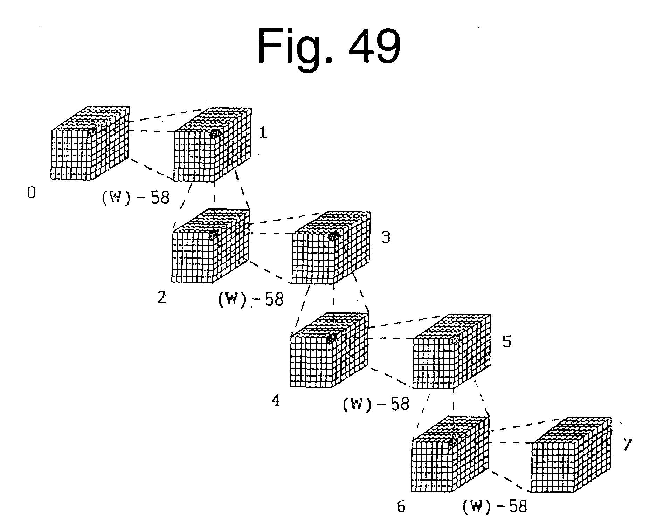

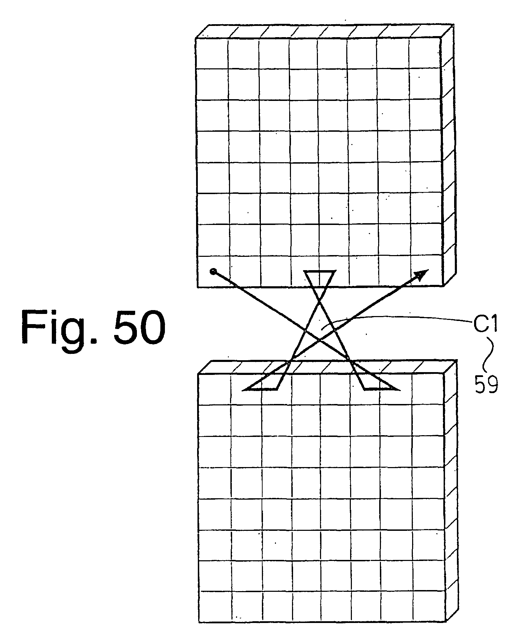

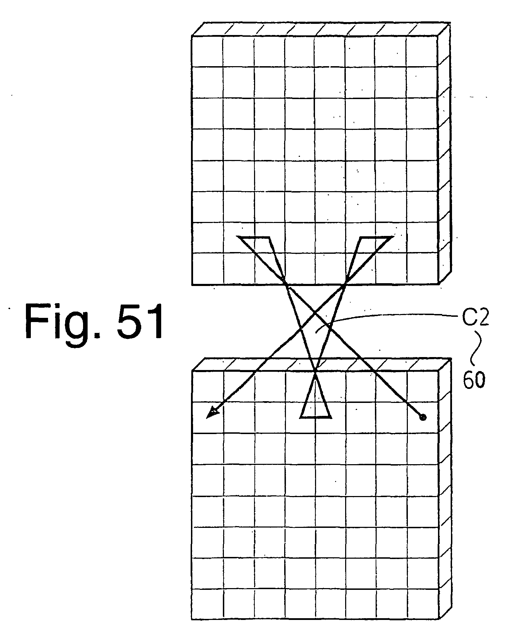

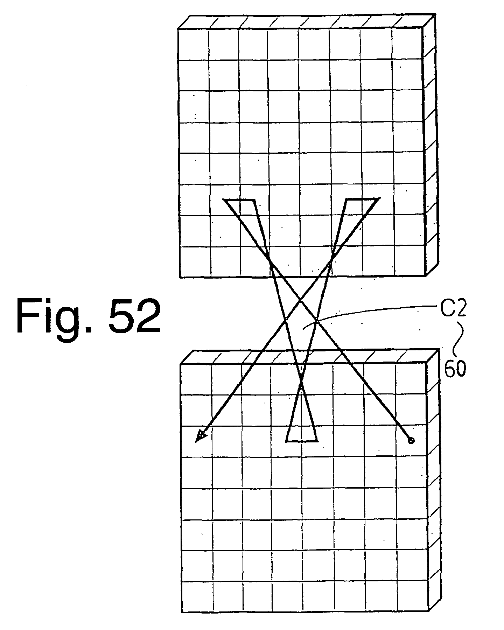

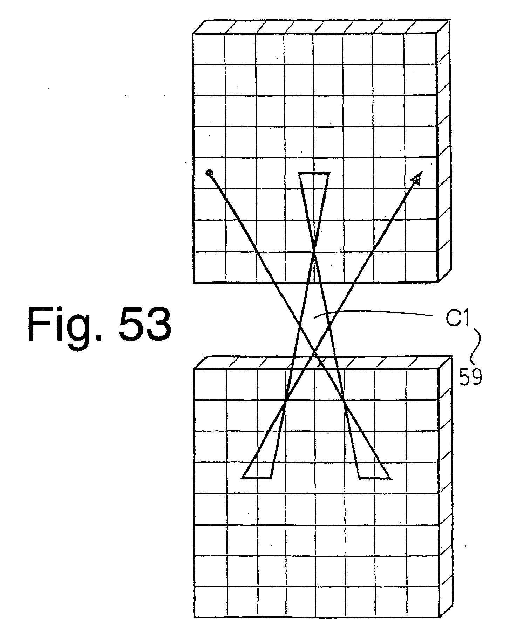

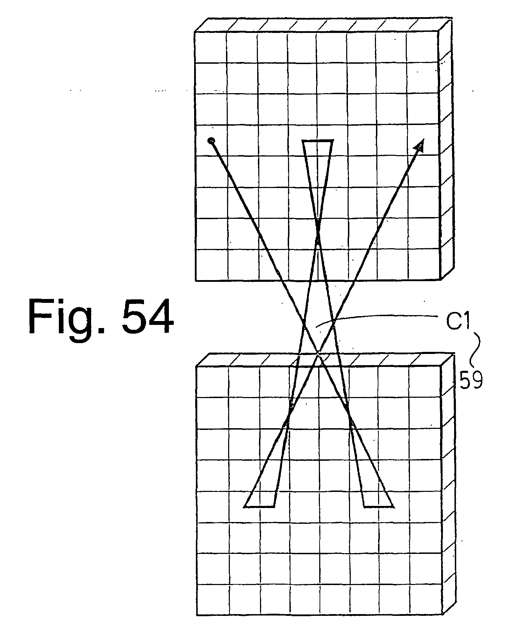

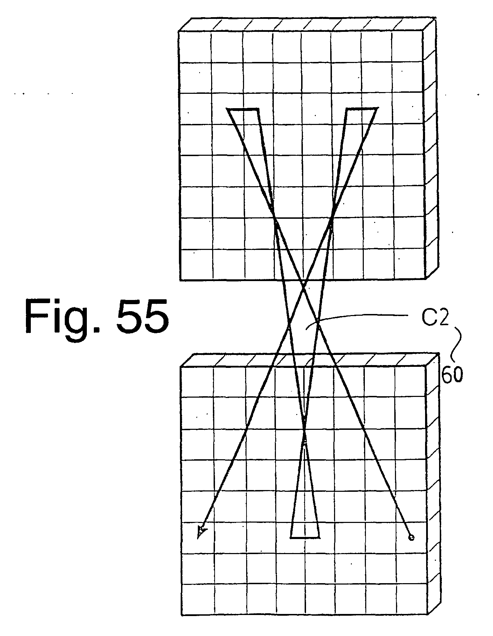

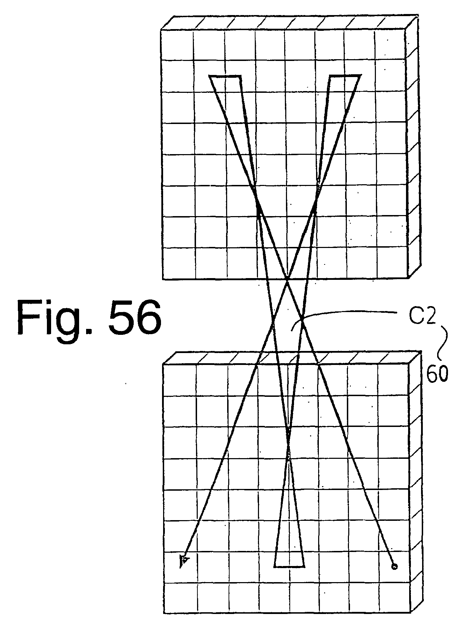

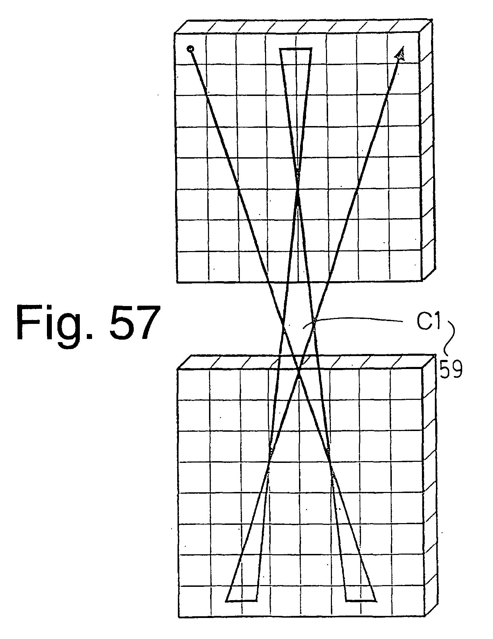

Due to the constant behaviour obtained after establishing the non-linear numeric ordering system in the structure, we can tessellate, percolate and go through the whole volume of information represented and/or contained in the diffuse structure, and reference it, preferably in the unit structure in virtually real time in electromagnetic environments, reducing the number of digits required to operate on a volume of information in the order of 512⁸ (fig. 32).

In short, it is an information processing system in electromagnetic environments that, based on a three-dimensional non-linear numerical ordering of the information points, establishes within a discrete structure or matrix, that we will define as pattern unit, a series of relationships between the information points contained in it, in such a way that it allows us to operate on all of them simultaneously.

The three-dimensional non-linear numerical ordering system can be used to order, relate, store and access any type of information, independently of the form it presents itself. It takes advantage of the characteristics of the electromagnetic environment based on an auto-poietic, non-linear, and cyclic ordering, established within a preferably cubic structure with fractal properties. The system can also be used in the manufacture of photonic crystals thanks to its ordering principles.

Now that the nature of this invention and the optimal way to put it into practice has been sufficiently described, it only remains to be said that variations are possible either in the system as a whole or in any of its parts, without substantially changing the nature of the invention claimed hereunder.

## Claims

1. Three-dimensional non-linear numerical ordering system devised to be used in computer, electronic or electromagnetic systems, such as software and hardware, for instance, in computer and / or microprocessor programs, for information processing in electromagnetic environments; and also to handle photonic crystals. It is **characterized in that** it is based on an isotropic unit pattern structure with fractal characteristics and properties, initially consisting of a cubic system (1), where each of its three axes are divided into eight segments numbered, optionally from 0 to 7, in base 8 from the origin of coordinates 000 (5). Consequently, the pattern structure is divided into 512 equal sub-units, defined by three digits, each one of them being the segment of the coordinate that represents its location in relation to the axes z (2), y (3), x (4) respectively, in such a way that the subunit that represents the origin point of coordinates will be identified by the digits 000 (5), and the adjacent sub-units will be defined by the digits 100 (6), 010 (7) and 001 (8) (corresponding to each axis) and so on until the 8³ sub-units are completed. Therefore, the last subunit, number 512, always following in base 8, will be defined by the digits 777 (9), and will be located at the end opposite the first one, identified by the digits 000 (5), in relation to the symmetry centre.

2. Three-dimensional non-linear numerical ordering system as described in the previous claim, **characterized in that** starting at the origin of coordinates, subunit 000 (5), the 512 sub-units defined by the unit pattern structure (15) are sorted into groups according to a constant sequence 1 (10), 2 (11), 2 (12), 2 (13), 1 (14), that remains invariable in the three coordinate axes x(4), y (3), z (2) and in its virtual volume as a whole, constituted by the initial structure (1).

3. Three-dimensional non-linear numerical ordering system as described in the previous claims, **characterized in that** based on the aforementioned initial structure (1), a unit pattern structure (15) is obtained applying preferably a series of symmetry operations that are effective on the odd groups of the previous sequence G1 (10), G3 (12) and G5 (14), in such a way that the cubes included in the even blocks, G2 (11) and G4 (13), remain invariable, although it is possible to obtain the same results alternatively applying the symmetry operations on the even blocks.

4. Three-dimensional non-linear numerical ordering system as described in the previous claims, **characterized in that** the symmetry operations applied to the sub-units included in the odd blocks can be any of the operations that define the holohedry of the cubic system, as the structure has been defined as a regular cube (1); these symmetry operations may preferably be:
- Three successive reflections in relation to the three symmetry planes of the cube, all of which are orthogonal to its faces (16).
- Three successive turns in the same direction, each one in relation to one of the three symmetry binary axes of the cube (3E⁴) (17).
- Four successive turns in the same direction, each one in relation to one of the four symmetry ternary axes of the cube (4E⁴) (18).
- Six successive turns in the same direction, each one in relation to one of the six symmetry binary axes of the cube (6E⁴) (19).
- An inversion in relation to the symmetry centre of the cube (C) (20).

5. Three-dimensional non-linear numerical ordering system as described in the previous claims, **characterized in that** the result is independent from the starting point of the coordinates 000 (5) whatever its location is, as long as the relevant structure maintains the conditions of a regular cubic system and the said block sequence 1 (10), 2 (11), 2 (12), 2 (13), 1 (14) is respected in each of the three coordinates, as well as in the unit pattern structure (15). Preferably through these or other equivalent operations, a non-linear ordering within the initial basic structure (1) is established, giving us as a result the unit pattern structure (15), within which all the sub-units are related, as the three-dimensional non-linear numerical ordering system we are describing establishes all the possible symmetries or relationships between the elements integrated in the unit structure (1). This is possible through the establishment of a constant behaviour or route cycle in each of the coordinates, as well as at the ordinal route of the unit pattern structure (15), from subunit 000 (5), the origin of coordinates, to the final subunit 777.

6. Three-dimensional non-linear numerical ordering system as described in the previous claims, **characterized in that** the fractal and cyclic behaviour of the unit pattern structure (15), preferably three-dimensional in electromagnetic environments, gives it the fractal properties that allow us to relate all the elements integrated in the unit pattern structure (15); they are connected every 2, 4, 8, 16, 32, 64, 128, 256 sub-units in such a way that we can operate on the 512 sub-units simultaneously, that is, with the unit pattern structure (15) as a whole.

7. Three-dimensional non-linear numerical ordering system as described in the previous claims, **characterized in that** the constant behaviour of the three coordinates, as well as its fractal or recurring character, allow us to define and operate with a fourth coordinate, W (22), with the same behaviour as the three coordinates that define the unit pattern structure (15), that is, with the same behaviour sequence 1 (10), 2 (11), 2 (12), 2 (13), 1 (14).

8. Three-dimensional non-linear numerical ordering system as described in the previous claims, **characterized in that** the fourth coordinate W (22), with the same characteristics as the previously described ones, x (4), y (3), z (2), allows us to define eight consecutive fractal levels in each of the 512 sub-units defined in the unit pattern structure (15).

9. Three-dimensional non-linear numerical ordering system as described in the previous claims, **characterized in that** the unit pattern structure's (15) fractal characteristic or property does not change as long as the motion through the successive levels of the structure is horizontal, which means that the successive route is 512 elements or sub-units in the first level, 512² elements or sub-units in the second level, 512³ elements or sub-units in the third level, 512⁴ elements or sub-units in the fourth level, 512⁵ elements or sub-units in the fifth level, 512⁶ elements or sub-units in the sixth level, 512⁷ elements or sub-units in the seventh level, 512⁸ elements or sub-units in the eighth level. To pass from the last element of a certain level -X- (subunit 777^{x} in base 8) to the first one of the next level (subunit 000^{x+1}) the same symmetry operation is applied, and therefore, the fractal characteristic is respected.
